# EUROPEAN PATENT APPLICATION

(11) **EP 3 925 932 A1**
(43) Date of publication of application: **22.12.2021**
(21) Application number: 20180574.4
(22) Date of filing: 17.06.2020
(51) Int. Cl.: C01G 1/06, B01D 9/00, C01G 45/06

(54) **CONTAINED PRODUCTION OF PHARMACEUTICALLY PURE CRYSTALS**

(71) Applicant: Biosyn Arzneimittel GmbH, 70734 Fellbach (DE)
(72) Inventor: Kottwitz, Ortwin, 70825 Korntal-Münchingen (DE); Stiefel, Thomas, 70184 Stuttgart (DE)
(74) Representative: Grünecker Patent- und Rechtsanwälte PartG mbB

(57) **Abstract**

The present invention relates to means and methods for producing crystals or crystalline substances in a contained vessel. In particular, crystals or crystalline substances, which are useful as pharmaceutical ingredients, can be manufactured.

## Description

The present invention relates to means and methods for producing crystals or crystalline substances in a contained vessel. In particular, crystals or crystalline substances, which are useful as pharmaceutical ingredients, can be manufactured.

### BACKGROUND

Crystallization is conventionally referred to as a process of the formation of solid crystals, precipitating from a solution or melt or rarely deposited directly from a gas. Conventionally, the crystallization process consists of two major events, namely, nucleation and crystal growth. Nucleation is the step wherein the solid molecules disperse in the solvent start to form clusters on the nanometre scale. The stable clusters are denominated "nucleate". Whenever the clusters are not stable, they re-dissolve. In order for the clusters to become stable, they have to reach a critical size. The critical size depends on operating conditions such as temperature, super saturation, etc. At a stage of nucleation, the atoms in the substance to be crystallized are arranged in a defined manner that defines the crystal structure.

The term "crystal structure" refers to the relative arrangement of the atoms rather than the macroscopic properties of the crystal, which is in turn defined by parameters such as size and shape. The properties of the crystal are typically the result of the (internal) crystal structure.

Subsequent to the nucleation, the crystal growth occurs, which is the growth of a nucleate that succeeds in achieving the critical cluster size. The driving force of the crystallization process comprising nucleation and crystal growth is the super saturation. The size of the crystals depends upon the conditions to favour either the nucleation or the growth of the nuclei. Once the super saturation is exhausted, the solid liquid system reaches the equilibrium and the crystallization process is complete. The operation conditions can be modified from the equilibrium to supersaturate again.

Many compounds have the ability to crystallize with different crystal structures, a phenomenon called polymorphism. Each polymorph represents a different thermodynamic solid state and crystal polymorphs of the same compound exhibit different physical properties, e.g., the solution rate, shape, melting point, etc. Polymorphism is of a major importance in industrial manufacture of crystalline products.

Crystallization may be used in the industry in order to provide highly purified products, in order to obtain salts or other crystalline end products.

For a crystallization, or re-crystallization to occur from a solution, the solution must be supersaturated. This means that the solution has to contain more solute entities (molecules or ions) dissolved than it would contain under the equilibrium, i.e., the saturated solution. Supersaturated conditions can be achieved by various methods such as solution cooling, addition of secondary solvents to reduce solubility of the solute (anti-solvent or drown out technique), chemical reaction or change in pH. All of these methods are employed in industrial practice. In addition, solvent evaporation can be used.

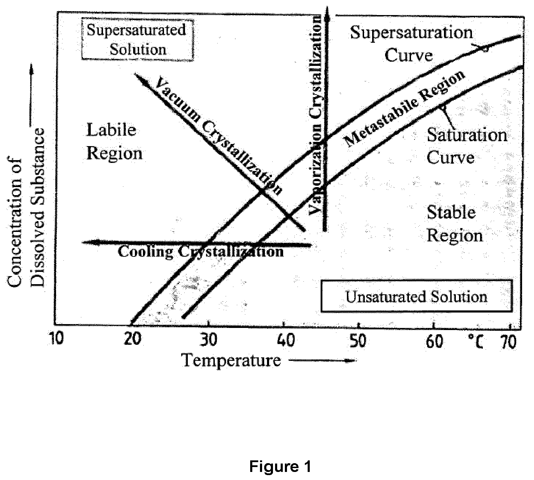

Figure 1 exhibits a saturation curve, i.e. graph, which shows the borderline between unsaturated and supersaturated solution. In practice, between the saturation curve and the super saturation curve, a so-called meta-stable region occurs. Between the saturation curve and the super saturation curve, a spontaneous crystallization of the solid takes place in this meta stable region. In order to enter the left-handed region, i.e. the supersaturated solution, the temperature may be rapidly decreased without changing the amount of substance per volume of solution (so-called cooling crystallization), the amount of substance per volume of solvent may be rapidly increased at a constant temperature, e.g. by vaporization (so-called vaporization crystallization), or both temperature and amount of substance per volume of solvent are rapidly changed simultaneously, i.e. the temperature is decreased, while the amount of substance per volume is increased (so-called vacuum crystallization). Once a simple saturated solution is obtained, a seed crystal is then introduced in order to induce the crystallization process.

Conventional industrial equipment for crystallization makes use of cooling crystallization, vaporization crystallization and vacuum crystallization.

One example for vaporization crystallization equipment is the so-called circulating liquid evaporator crystallizer. A screw pump draws the circulating liquid down inside the tube side of the condensing stream heater. The heated liquid then flows into the vapour space where flash evaporation occurs resulting in super saturation. The vapour leaving is condensed. The supersaturated liquid flows down the down flow tube and then up through the bed of fluidized and agitated crystals. The crystals grow in size. The leaving saturated liquid then goes back as a recycle stream to the heater where it is joined by the entering fluid. The larger crystals settle out and the slurry of crystals and mother liquid is withdrawn as a product.

An example for cooling crystallization is realized in classical tank crystallizers. Saturated solutions are allowed to cool in open tanks. After a period of time, the mother liquid is drained and the crystals are removed.

One tank crystallizer example for a vacuum crystallizer is the so-called circulating magma vacuum crystallizer. A suspension (magma) of crystals is circulated - without separating the liquid from the solid - out of the main body of the apparatus through a circulating pipe by a screw pump. The magma flows through a heater, where the temperature is raised. The heated liquid then mixes with body slurry and boiling occurs at the liquid surface. This causes super saturation in the swirling liquid near the surface, which deposits in the swirling suspended crystals until they leave again via the circulating pipe. The crystals are drawn off near the bottom of the main body (vessel). The vapours leave through the top.

While these classical crystallization methods employ seed crystals for initiating the crystallization process, other methods have been described, wherein nucleation and crystal growth are initiated without the need for seed crystals. DE 60310923 describes the production of crystals using high power ultra sound. The method is in particular useful for the production of highly pure crystals under aseptic conditions. In the manufacture of high-purity products under aseptic conditions, it is normally not possible to use seed crystals, as these can be sources of contamination. In addition, the solution in the production apparatus is highly pure and free of particles that may act as seed crystals.

Hydrates are inorganic or organic substances that contain crystal bound water. The water molecules are combined with the molecule in a definite ratio as an integral part of the crystal. The notation of hydrate compounds is "nH₂O", wherein n is the number of water molecules per molecule of salt. "n" is usually a low integer although it is possible that fractioned values exist. In a monohydrate n is 1; in a hexa-hydrate n is 6, etc.

The stability of hydrates is generally determined by the nature of the compounds, their temperature and the relative humidity if they are exposed to an open surrounding. Inorganic and organic compounds exist in various hydrates.

One example is Manganese chloride tetra-hydrate (MnCl₂·4H₂O) which can be used as an active pharmaceutical ingredient (API) especially in parenteral preparations. The crystallization of highly purified species meeting the GMP guidelines for manufacturing of APIs is not possible using conventional crystallization processes, in particular when high purity standards have to be met.

Given the liability of various hydrates, it is in particular necessary to work under precise conditions in order to obtain a homogeneous composition of precisely defined crystal water content. The product should not contain too much crystal water nor surfaces obtained from loss of crystal water. In order to prepare an API standard crystal, not only a high degree of purity or homogeneity is to be met but also conditions avoiding various type of contaminations need to be met.

Types of possible contaminations contain inorganic impurities, for example heavy metals and / or organic impurities for example bacterial endotoxins. This includes avoidance of microbial exposition.

Typical API crystalline substances are metal salts, which may be used for parenteral preparations, such as injection solutions with a single trace element or a multi trace element combination; parenteral nutritions; sterile oral solutions; aseptic topic preparations, e.g. formulated as lotion, gel or cream.

Crystalline substances requiring high homogeneity and purity may be selected from Sodium selenite pentahydrate; Sodium selenite anhydrous; Copper chloride di-hydrate; Chromium chloride hexa-hydrate; Manganese chloride tetra-hydrate; Iron(II) chloride tetra-hydrate; Sodium molybdate di-hydrate; Zinc chloride di-hydrate and other metal salts.

Unfortunately, the production of highly purified metal salts meeting the standards of the pharmacopeia is incompletely described in the prior art, hardly reproducible and does not meet the GMP Guidelines for the manufacturing of Active Pharmaceutical Ingredients (API's). Therefore, many crystalline substances meeting the pharmacopeia standards are not available and cannot be synthesized.

Metal chloride hydrates are good examples that there is a need in the field for new means and a new manufacturing method for preparing well-defined and highly pure crystals, preferably useful in the pharmaceutical field. There is also a need to provide such metal salts meeting the pharmacopeia standards.

### SUMMARY OF THE INVENTION

The present inventors facing the problem of the provision of metal salt hydrates such as

| | |
|---|---|
| - MnCl₂·4H₂O | Manganese(II) chloride tetra-hydrate |
| - Na₂MoO₄·2H₂O | Sodium molybdate di-hydrate |
| - CuCl₂·2H₂O | Copper(II) chloride di-hydrate |
| - FeCl₂·4H₂O | Iron(II) chloride tetra-hydrate |
| - CrCl₃·6H₂O | Chromium(III) chloride hexa-hydrate |
| - NiCl₂·6H₂O | Nickel(II)-chloride hexa-hydrate |
| - CoCl₂·6H₂O | Cobalt(II) chloride hexa-hydrate |
| - FeCl₃·6H₂O | Iron(III) chloride hexa-hydrate |
| - ZnCl₂·2/4H₂O | Zinc(II) chloride di-/ tetra-hydrate and |
| - C₁₂H₂₂O₁₄Zn | Zinc gluconate |

meeting the standards of the pharmacopeia, in particular for the application in parenteral preparations, have provided such a new manufacturing method, which is suitable for the production of all of these (and even more) salts in pharmaceutical purity.

Consequently, theses metal salt hydrates meeting GMP standards for API's (Active Pharmaceutical Ingredients) are made available to the field.

Furthermore provided is a corresponding device.

Manufacturing method and device are the results of a sophisticated research program and a highly laborious process, in which several unexpected experimental difficulties had to be overcome. The details of the research program and obstacles, which needed to be overcome are shown in the Example section.

Surprisingly, the new method and corresponding new device allows the manufacturing of crystalline products in one closed vessel under ultra clean and aseptic conditions. The new manufacturing method as well as the new device are therefore not limited to the production of metal chloride hydrates, but open a new possibility for the reliable and manufacturing of pharmaceutical grade, highly pure ("first class") crystals.

### FIGURES

Figure 1 exhibits a saturation curve, i.e. graph, which shows the borderline between unsaturated and supersaturated solution.
Figures 2 and 3 show and illustrate devices of the present invention.
Figure 4 shows a stirrer of the present invention.
Figure 5 shows the visualisation of cooling crystallisation by highlighting the metastable zone.
Figure 6 shows two graphs that were recorded with the Particle Track sensor.
Figure 7 is a schematic representation of a metastable zone.
Figure 8 is a schematic presentation of two combined processing steps, vacuum distillation and crystallization
Figure 9 shows a distillation experiment of the present invention.
Figure 10 shows a cooling experiment of the present invention.

### DETAILED DESCRIPTION OF THE INVENTION

### Method of the present invention

According to the present invention, a manufacturing method is provided which employs vacuum crystallization in combination with a drying process, in which cooling to remove solvent from an obtained crystal cake is employed, preferably by using a condenser trap, more preferably an ice condenser. Solvent from the crystal cake is frozen in the condenser trap and thereby removed from the crystal cake.

"Vacuum Crystallization" is a process, wherein to a saturated solution fed to a closed vessel vacuum is applied and the solution evaporates and thereby cools adiabatically, resulting in crystallization.

A "condenser trap" (synonyms: condensation trap, condensing trap, condensate trap) is a chamber, through which the solvent in its gasoline form is guided and in which the solvent can be condensed or frozen. To remove solvent during drying from the crystal cake, solvent from the crystal cake is frozen (and therewith trapped) in the condenser trap. To remove solvent during drying from the crystal cake, the condenser trap is preferably kept at a temperature between -10 °C and -50 °C, more preferably between -15 °C and -40 °C, most preferably -20 °C and -30°C, in particular, if water is the solvent. Preferably, the condenser trap is an ice condenser and the solvent is water. Apart from water, substances to be crystallized may be dissolved in acidic or alkaline aqueous medium. Also here, water is the solvent of the acidic or alkaline aqueous medium and water is trapped and frozen in the condensing trap.

"Freezing" of the solvent "in the condenser trap" means that the solvent evaporated from the crystal cake is frozen and thereby trapped in the condenser trap.

With the freezing of solvent in the condenser trap, the re-dissolution of crystal cake is avoided in the drying process. If solvent is frozen in the condenser trap, it was surprisingly found that the re-dissolution of the crystal cake during drying is avoided. Drying without a condenser trap, in which solvent from the crystal cake is frozen and thereby removed from the crystal cake, turned out not to be working and led to a partial or full re-dissolution of the crystal cake and spoiling of the crystals. It was virtually impossible to obtain the final product without using said condenser trap. One possible explanation for this finding is as follows: if solvent is frozen in the condenser trap, the partial pressure of the solvent in the vessel is reduced and/or the reflux of the solvent to the reaction vessel is prevented; thereby the re-dissolution of the crystal cake during drying is avoided.

In one embodiment, the capacity of the condenser trap, preferably the ice condenser, is so high that at least five times the amount of the remaining solvent in the reaction vessel beyond the amount of the crystal solvent (preferably water) can be frozen and thereby trapped, more preferably at least two times the amount of the remaining solvent in the reaction vessel beyond the amount of the crystal solvent (preferably water) can be frozen and thereby trapped, most preferably at least the amount of the remaining solvent in the reaction vessel beyond the amount of the crystal solvent (preferably water) can be frozen and thereby trapped.

Typically, drying takes place under applying vacuum. Under vacuum, solvent from the crystal cake is evaporated and trapped and thereby frozen in the condenser trap. The vacuum is chosen so that the solvent is evaporated but the crystal cake is not dissolved. In one embodiment, during drying, the reaction vessel is held at a pressure of 0 and 500 mbar, preferably 0.5 and 100 mbar, more preferably 1-50 mbar, most preferably 1 and 10 mbar.

If necessary, the temperature in the vessel during drying is controlled. In this embodiment, the temperature is controlled to be on the one hand sufficiently high for the evaporation of the solvent, but on the other hand low enough so that the crystal cake is not dissolved by too much heating. In one embodiment, during drying, the reaction vessel is held at a temperature between 0 and 50 °C; preferably, 0 and 40 °C, more preferably 10 and 30 °C, more preferably 20 °C and 40 °C, even more preferably 25 °C and 30 °C. Most preferably, the reaction vessel is held between 0 °C and 40 °C at a pressure of between 0,5 mbar and 10 mbar.

The phrase, the "temperature is held at" means that a heater outside the vessel is set to a temperature value within the mentioned temperature range. The heater outside the vessel is an external heater of the vessel, like a thermo unit (such as thermo unit (5)), e.g. a double jacket.

Preferably, the method according to the present invention is performed in a contained reaction vessel. A "contained reaction vessel" ("or single pot") is a closed system. It may be in closed connection with other vessels, but is shielded against the environment. Since method and device of the present invention allow for the production of crystals in a "single pot" reaction, the reaction - from beginning to the end - is shielded against contaminations from outside.

In a first aspect, the present invention provides a method for manufacturing a crystalline substance, wherein the method employs vacuum crystallization of a solution of the substance to be crystallized, comprising
(i) a step of applying vacuum to a vessel containing a solution of the substance to be crystallized to start crystallization, and
(ii) a step of drying an obtained crystal cake in the vessel, wherein during drying
   a condenser trap connected to the vessel is used for removing solvent from the crystal cake, wherein solvent from the crystal cake is frozen in the condenser trap and thereby removed from the crystal cake,
   wherein preferably drying comprises applying vacuum,more preferably drying comprises applying vacuum and temperature control.

In a further aspect, a method is provided comprising
a) a step of applying vacuum to form crystal nuclei,
b) a cooling step after the formation of nuclei,
c) optionally, removing the remaining liquid (denominated "mother liquor") from the obtained grown crystals, preferably to simultaneously remove impurities and contamination with the mother liquor, to obtain a crystal cake,
d) drying of the crystal cake (i.e. a crystal mush) obtained after conducting step c), wherein during drying a condenser trap connected to the vessel is used for removing solvent from the crystal cake, wherein solvent from the crystal cake is frozen in the condenser trap and thereby removed from the crystal cake, and
e) optionally, setting the stoichiometry of the crystal.

In a further embodiment of this aspect, the method comprises
a) a step of applying vacuum to form crystal nuclei,
   preferably by applying vacuum to a vessel containing a supersaturated solution of the substance to be crystallized, wherein one or more gas bubbles are created that nucleate the supersaturated solution of the substance to be crystallized,
   more preferably by applying vacuum to a vessel containing a supersaturated solution of the substance to be crystallized under temperature regulation, wherein one or more gas bubbles are created that nucleate the supersaturated solution of the substance to be crystallized, optionally under stirring,
   even more preferably by applying vacuum to a vessel containing a supersaturated solution of the substance to be crystallized under temperature regulation, wherein the supersaturated solution is distilled and one or more gas bubbles are created that nucleate the supersaturated solution of the substance to be crystallized, optionally under stirring,
b) a cooling step after the formation of nuclei,
   wherein during the cooling crystals grow,
   in one embodiment by applying a continuous decrease of temperature to favour crystal growth, preferably with a decrease of temperature at a range of 1 to 5 °C per minute, more preferably 2 to 4 °C per minutes, most preferably 2.5 to 3.5 °C per minutes;
   in another embodiment, cooling is performed stepwise: At the beginning the temperature is decreased fast, e.g. at a range to 1 to 5 °C per minute, more preferably 2 to 4 °C per minutes, most preferably 2.5 to 3.5 °C per minutes; after
   reaching room temperature of 25 °C slowly, e.g. 0.1 to 0.5 °C per minutes to induce further growth of crystals;
   wherein further the target temperature of the cooling step in the solution is preferably 0 to 10 °C;wherein cooling preferably takes place under normal pressure or contains a period of cooling under normal pressure;
c) optionally, removing the remaining liquid (denominated "mother liquor") from the obtained grown crystals, preferably to simultaneously remove impurities and contamination with the mother liquor, to obtain a crystal cake,
   wherein after removing the remaining liquid, optionally a washing step maybe performed to remove further and/or remaining impurities. If the crystal cake is washed, washing with the solvent of the crystal is accompanied by high losses of crystals, e.g. when done in watery milieu with a hydrate. A non-polar organic solvent may be used to avoid losses.

If the yield is not critical, the solvent, e.g. water, may still be used. The advantage of not using organic solvents is that they cannot be detected later in the final product. Typically, organic solvents must not be present in the final product.
d) drying of the crystal cake (i.e. a crystal mush) obtained after conducting step c), wherein during drying a condenser trap connected to the vessel is used for removing solvent from the crystal cake, wherein solvent from the crystal cake is frozen in the condenser trap and thereby removed from the crystal cake,
   wherein preferably drying comprises applying vacuum,
   more preferably drying comprises applying vacuum and temperature control;
e) optionally, setting the stoichiometry of the crystal by
   (i) a final drying step to remove wet solvent and to thereby obtain the optimized stoichiometry of crystal solvent (preferably water) or
   (ii) solvent injection, wherein the solvent is injected in a gaseous form (preferably water steam is injected), to increase the degree of solvent to obtain the optimized crystal solvent stoichiometry.

In the methods of the present invention, preferably drying step d) comprises a period of drying, which is performed without the introduction of mechanical energy, more preferably without continuous stirring, wherein only upon the formation of an incrusted layer on the crystal cake (i.e. crystal mush), the incrusted layer is broken by slow stirring periods, preferably involving not more than 10, 5 or 3 revolutions per hour, slow stirring of less than 3 revolutions per hours, less than 2 revolution per hour, or less than 1 revolution per 2 hours. This type of drying is called "static drying".

The static drying preferably continues up to the removal of the solvent, preferably water, to a degree wherein the amount of solvent is so low that the local (i.e. partial) (re-)dissolution of the crystal mush or crystal cake is no longer possible.

Preferably, during static drying optionally during the whole drying step, vacuum and/or temperature are controlled so that the re-dissolution of the crystal cake is avoided.

As the capacity of the vacuum pump is limited and not all solvent can be removed by applying vacuum, cooling of evaporated solvent is performed by using a condenser trap, more preferably by using an ice condenser, which is connected to the reaction vessel during the static drying step, preferably during the whole drying step. The solvent is thereby frozen and trapped in the condenser trap.

Typically, static drying takes place under applying vacuum. Under vacuum, solvent from the crystal cake is evaporated and trapped and thereby frozen in the condenser trap. The vacuum is chosen so that the solvent is evaporated but the crystal cake is not dissolved. In one embodiment, during drying, the reaction vessel is held at a pressure of 0 and 500 mbar, preferably 0.5 and 100 mbar, more preferably 1-50 mbar, most preferably 1 and 10 mbar.

If necessary, the temperature in the vessel during static drying is controlled. The temperature is controlled to be on the one hand sufficiently high for the evaporation of the solvent, but on the other hand low enough so that the crystal cake is not dissolved by too much heating. In one embodiment, during drying, the reaction vessel is held at a temperature between 0 and 50 °C; preferably, 0 and 40 °C, more preferably 10 and 30 °C, more preferably 20 °C and 40 °C, even more preferably 25 °C and 30 °C. Most preferably, the reaction vessel is held between 0 °C and 40 °C at a pressure of between 0,5 mbar and 10 mbar.

The methods of the present invention may comprise the following steps of
a) optionally, distillation under vacuum,
b) optionally, re-dissolution of precipitate,
c) optionally, removal of contaminants
d) nucleation of a supersaturated solution under vacuum
e) preferably crystallization by cooling
f) optionally, separation of the mother liquor
g) drying
h) optionally, setting the Stoichiometry, and
i) optionally, product withdrawal.

These steps are further explained herein below.

The present invention may also contain a step of synthesizing the crystal from raw material.

By conducting the steps of synthesis from raw material, preparing a solution, conducting one or more filtration steps, preparing of a supersaturated solution, crystallization, removal of mother liquor, drying and obtaining the final product, all manufacturing steps of the crystallization can be performed in-house, preferably in a contained vessel. This may be a requirement for meeting GMP standards for API's (Active Pharmaceutical Ingredients). Example 2 shows the details of such a procedure starting from the synthesis for MnCl₂.

### Distillation under vacuum

One way of obtaining crystals is by way of vacuum crystallization from a supersaturated solution. According to the present invention, the crystal cake is dried, wherein a condenser trap is employed.

A supersaturated solution of the substance to be crystalized may be obtained in various ways. Preferably, the solution of the substance to be crystalized is concentrated by vacuum distillation to obtain a supersaturated solution.

"Distillation" is a process of separating substances, e.g. the solvent, from a liquid containing mixture by using selective boiling and condensation. "Vacuum distillation" in the present invention is distillation under reduced pressure to evaporate solvent and condensing evaporated solvent, preferably in a collection vessel, which may be connected to a cooling head. "Vacuum distillation" in the present invention, thus, comprises applying vacuum and condensing the evaporated solvent, preferably in a collection vessel, which may be connected to a cooling head.

The supersaturated solution shall have a concentration in the metastable zone as identified in lab-scale experiments (see Example 2).

The raw substance to be crystalized may be inserted into the reaction vessel (e.g. a glass reactor) using a suction hose set. The distillate quantity is calculated to control the vacuum distillation. The substance is then dissolved in a solvent. The solution may be filtered using an ultra-filter to remove impurities. This is described further herein below.

The distillation may be carried out under normal pressure, but is typically carried out under vacuum, preferably at 1-100 mbar, more preferably 5-50 mbar, most preferably 40-50 mbar.

The temperature of a heater outside the reaction vessel to heat the solution in the vessel is set to a value beyond boiling temperature of the solution. For example, a double jacket surrounding the reaction vessel with a temperature of 135 - 145 °C may be used. The temperature of the solution may be between 20 - 70 °C, more preferably between 40 and 50 °C.

During the whole crystallization process, samples may be taken via a sampling flange of the vessel using a sterile suction device for sampling the liquid, crystal mush (i.e. crystal cake) or crystalline samples from the vessel. For liquid sampling, a syringe may be used as well. A first sample may be taken during distillation from the non-saturated, saturated or supersaturated solution and/or after distillation from the obtained supersaturated solution.

The distillation is stopped after reaching the calculated distillate quantity by breaking the vacuum.

### Re-Dissolution of Precipitate

If solid material precipitates during distillation, this material needs to be re-dissolved in order to get a homogenous supersaturated solution.

To do this, after distillation, the solution is heated to a temperature higher than the distillation temperature, e.g. 70 - 80 °C, preferably under normal pressure. The temperature of a heater (e.g. a double jacket) outside the reaction vessel to heat the solution in the vessel is set to a value beyond boiling temperature of the solution. For example, a double jacket surrounding the reaction vessel with a temperature of 135 - 145 °C may be used.

In this way, precipitates that may have occurred in the vessel, in particular precipitates at the wall of the reaction vessel are re-dissolved

Alternatively or additionally, steam might be injected to dissolve any precipitates. The steam is preferably water steam.

After re-dissolving potential amounts of precipitate, the crystallization is initiated by nucleation in the obtained supersaturated solution.

### Removal of contaminants

Before the step of crystallization, after or before the Re-Dissolution of Precipitate, the method of the present invention may contain a step of removing contaminants.

Contaminants can be organic contaminant, which may be removed by prefiltration or filtration. Contaminants may also be bacteria or bacterial endotoxins, all of which may be removed by particular membrane filters or by ultrafiltration.

Purification can also be by removal of inorganic contaminants via crystallization. This can be performed during the removal of the mother liquor containing the salt or inorganic contaminants. Alternatively, a recrystallization step may be performed before the method of claim 1 to remove inorganic contaminants by crystalizing the intended substance and removing the contaminants from the supernatant.

In order to remove particles and organic contaminants from the substance to by crystalized different microporous membrane filter capsules and ultrafiltration modules may be employed during the filtration trials. Pre-filtration shall retain particles and various macroscopic impurities. Ultrafiltration (10000 Dalton cut off) and bacterial filtration shall remove bacterial endotoxins and microbiological contaminants.

Generally, the filter material has to show a resistance against acidic and halogen solutions. Suitable materials were identified e.g. PTFE (polytetrafluoroethylene), ECTFE (ethylene chlorotrifluoroethylene), PP (polypropylene) and PES (polyethersulfone). In pre-tests PES filter membrane material showed excellent performance, particularly under the harsh conditions (very acidic milieu), and was selected to be used for all filters, i. e. particle and bacterial filtration as well as ultrafiltration. Most preferred and resistant to the harsh conditions of the transition metal salt solutions (very acidic milieu and halogen solution) is, thus, PES (polyethersulfone), which was selected as filter material suitable for the filtration processes.

Transition metal halogenide solutions feature a relatively high ionic strength at high concentrations, the filtration performance depends on the used concentration. In order to achieve reasonable filtration times and economic filter areas, solution concentrations of approximately 25 - 30 % (m/m) were used.

Pre-filter capsules (0.6 µm) and membrane filter capsules (0.2 µm) may be used for particle and membrane filtration as subsequent processing steps after a successfully performed synthesis as well as before and after ultrafiltration, respectively.
The intermediates - e.g. salt (e.g. MnCl₂,) solution from synthesis and salt (e.g. MnCl₂,) ultrafiltrate - may be filtered over sterile mono layer 0.6 (filter area: e.g. 180 cm²; membrane: polyethersulfone) and 0.2 µm membrane filter capsules (filter area: e.g. 480 cm²; membrane: polyethersulfone). At the same time pre-rinsing and flushing conditions with AP as well as the applied flow rates for the various product solutions are defined.

In order to remove organic impurities, e.g. bacterial endotoxins, ultrafiltration (cut off 10000 Daltons) may be performed after synthesis. The ultrafiltration should take place after synthesis and membrane filtration (0.2 µm).

Lab-scale filtration experiments may be conducted employing "cross flow" ultrafiltration. Approximately 0.5 I MnCl₂ solution was filtered over a Cadence Omega UF module (200 cm² polyethersulfone membrane; molecular weight cut off 10000 Daltons). The feed flow rate was adjusted to approximately 50 ml/min, the retentate outlet flow was controlled (p ≤ 2 bar). The obtained permeate flow was approximately 30 ml/min. As a result, the "cross flow" ultrafiltration is suitable for the planned application.

Based on the generated result theoretical scale-up was performed by increasing the filter area to 1000 cm². The calculation showed e.g. that the amount of approximately 25 I MnCl₂ tetra-hydrate solution expected from production scale could be filtered in an acceptable time frame of approximately three hours.

The following system configuration and handling parameters were set for production-scale ultrafiltration of MnCl₂ tetra-hydrate.

The filtration system may be assembled with an UF module, a 1000 cm² polyethersulfone membrane and a molecular weight cut off 10000 Daltons. The Cadence Omega UF module was intended to be single use and will be discarded after each production run. The feed flow rate and the corresponding retentate pressure for the ultrafiltration of the MnCl₂ tetra-hydrate solution as well as the permeate pressure were defined.

For completion of the ultrafiltration process flow rates and pressure limits during rinsing off the ultrafiltration system with purified water were established.

Removal of potential existing inorganic contaminants in the MnCl₂ tetra-hydrate solution was achieved by vacuum-cooling-crystallisation and subsequent separation of the mother liquor from the crystal cake. The basic idea behind this concept is purification. Crystals in general are very pure because of their highly ordered and well-defined arrangement - in theory most of the impurities stay in solution.

The crystallisation technique requires a defined, relatively high concentration of the MnCl₂ tetra-hydrate solution. In this concentration range the so-called metastable zone of MnCl₂ solution is situated - see Example 2. This zone describes a phase of the mother liquor with a defined temperature that is supersaturated - but has not yet responded with spontaneous nucleation with a certain finite time.

### Nucleation

Crystallization is initiated by nucleation in a supersaturated solution. "Nucleation" is the formation of crystal nuclei.

To do this, the temperature may be regulated or controlled, e.g. the solution is cooled from outside, e.g. the double jacket temperature is set to 1 °C. The target temperature in the supersaturated solution is higher than the outside temperature of the heater (e.g. double jacket), not particularly specified and depends on the substance to be crystalized.

The pressure may be set to vacuum, preferably to 10-500 mbar, more preferably 40 to 100 mbar. Due to the vacuum, the preparation begins to boil and is further cooled down.

The solution is stirred, e.g. the stirring speed is set to 10-100 RPM, preferably 40- 60 RPM, more preferably 45-55 RPM.

Under these conditions, gas bubbles of the boiling solvent are created which act as crystal seeds. Alternatively or additionally, other types of crystal seeds may be created by cavitation, e.g. by introducing inert gas.

The introduction of gas bubble bursts or explosions, e.g. due to the application of vacuum, is called "cavitation". The bubbles are often denominated "cavitation bubbles". The burst or explosion of the bubbles has a mechanical effect to the supersaturated solution and leads to an improved, more homogeneous crystal nucleation.

After the formation of crystal seeds, the vacuum is broken and the stirring speed is reduced, e.g. to 25 RPM or lower. The temperature is, then, typically above room temperature.

### Crystallization Phase

A crystallization phase may be run, preferably under normal pressure or containing a period of cooling under normal pressure. "Crystallization" or "Crystallization phase" is the phase during which crystals grow.

During the crystallization phase, vacuum may be drawn (i.e. applied) e.g. if crystal growth is not quantitative, solvent re-dissolves crystals or crystral growth is too slow. Example 4 shows two salts for which vacuum was drawn during the Crystallization Phase ("Phase 2 distillation" for FeCl₂ · 4 H₂O and Na₂MoO₄ · 4 H₂O). Other crystals, such as those further exemplified in Examples 3 and 4, grow well or even best under normal pressure without drawing vacuum.

The crystallization phase is performed by cooling the solution, e.g. to 10 °C.

The solution is allowed to continue crystallizing for a long time period, preferably at least one hour, more preferably at least 5 hours, or most preferably at least 10 hours.

The solution is allowed to continue crystallizing while stirring, e.g. with 50, 35 or 25 RPM or lower.

The solution is allowed to continue crystallizing under continuous decrease of temperature with a constant cooling rate or a stepwise decrease of temperature.

A constant cooling rate may preferably use a decrease of temperature at a range of 1 to 5 °C per minute, more preferably 2 to 4 °C per minutes, most preferably 2.5 to 3.5 °C per minutes;
In another embodiment, cooling is performed stepwise: At the beginning the temperature is decreased fast, e.g. at a range of 1 to 5 °C per minute, more preferably 2 to 4 °C per minutes, most preferably 2.5 to 3.5 °C per minutes; after reaching room temperature of 25 °C slowly, e.g. 0.1 to 0.5 °C per minutes to induce further growth of crystals;
The target temperature of the cooling step is preferably 0 to 10 °C, the temperature being the temperature in the solution. The target temperature may be controlled by setting temperatures in an external heating unit. The temperatures of the external heating units may be reduced stepwise, continuously or may be set only once.

If vacuum is drawn during the crystallization phase, the solvent may be removed by vacuum distillation during cooling, which may - for some crystals, e.g. as shown in Example 4 - improve crystal growth. In this embodiment the vacuum has a cooling effect so that the external temperature does not need to be set to temperatures as low as under normal pressure. Under normal pressure, the temperature of an external heating unit may be set to between 80 and 1°C, preferably 30 °C and 1°C, more preferably between 15 and 5°C. Under vacuum at pressure of between 10 and 50 mbar, preferably 20 and 30 mbar, the temperature of an external heating unit may be set to between 100 °C and 30°C, preferably 90 °C and 60 °C.

### Separation of the mother liquor

After crystallization is terminated, the liquid, i.e. the mother liquor, if still present, may be separated from the grown crystals (i.e. the crystal mass present in the remaining liquid or the crystal cake present in the remaining liquid) to obtain a crystal cake, e.g. via the bottom valve of the reaction vessel using inert gas overpressure.

The pressure is not more than 1500 mbar. The inert gas is preferably nitrogen or argon.

To speed up the draining process, the stirrer may be rotated briefly (e.g. at 25 RPM), if necessary.

All mother liquor is removed under aeration with inert gas, e.g. nitrogen or argon. Inert gassing of the crystal cake is continued to reach the target concentration range of the crystal (in m/m) before drying.

Optionally, a washing step maybe performed to remove further and/or remaining impurities.

### Drying

The crystal cake needs to be dried to end up with the final product ("crystalline powder").

After the drying step, the crystalline substance may be tested for its stoichiometry by conventional measurement techniques. They may be conducted inside the vessel or by deriving a small sample from the vessel conducting a measurement outside.

Unexpected problems arose in the first attempts to dry the obtained crystal cake by applying vacuum. The atmosphere in the reaction vessel led to the repeated and uncontrolled re-dissolution of crystals during drying as originally planned (see Example 2 above), thus spoiling the crystal cake.

It, thus, turned out to be necessary to modify the drying process. At the end of several failed attempts, a condenser trap was implemented, e.g. by way of an ice condenser. The solvent evaporated from the crystal cake is frozen and trapped in the condensing trap. Thereby, the crystal cake is dried and harmful (partial) re-dissolution during drying is avoided.

Still (partial) re-dissolution of the crystal cake is a risk. The inventors identified that the introduction of mechanic energy needs to be avoided, at least during a first phase of the drying. Stirring needs to be minimized as far as possible and is only executed to homogenize the crystal cake as far as necessary. This phase is called "static drying". "Static drying" is drying without the introduction of mechanical energy into the crystal cake.

### Static Drying

During the static drying step the temperature is preferably kept in a low range without modulation. The temperature in the static drying step is preferably lower than in the dynamic drying step.

In a more preferred embodiment, the temperature can be increased at the beginning of the dynamic drying step. Optional, before finalization of the whole drying step, the temperature may be lowered.

In an even more preferred embodiment of the present invention, the static drying step takes between 2 and 24 hours, more preferably between 6 and 18 hours, most preferably between 11 and 13 hours, alternatively most preferably between 6 - 8 hours.

Preferably, there is no stirring applied for the first at least four, at least three, at least two, or at least one hour(s) of the static drying step.

Drying may be interrupted optionally by the introduction of the inert gas into the reaction vessel Nitrogen or Argon are preferred inert gases.

In a preferred embodiment, the static drying step includes short intervals of very short movements of the stirrer, each less than one, less than two, less than three revolutions. Such movements may take place after intervals of resting which are at least one, at least one and a half, at least two, at least two and a half, or at least three hours. There may be several sequential intervals of resting and moving.

The goal of the static drying step is to obtain a significant reduction of the residual solvent content so that the dissolution of the crystals can no longer occur.

To start the static drying phase, the condenser trap, e.g. the ice condenser, is set to a temperature suitable to freeze out the remainder of the solvent, between -10 °C and -50 °C, more preferably between -15 °C and -40 °C, most preferably -20 °C and -30°C, in particular, if water is the solvent.. The crystal cake is stirred briefly to break up the surface. The pressure is set to vacuum.

Typically, static drying takes place under applying vacuum. Under vacuum, solvent from the crystal cake is evaporated and trapped and thereby frozen in the condenser trap. The vacuum is chosen so that the solvent is evaporated but the crystal cake is not dissolved. In one embodiment, during static drying, the reaction vessel is held at a pressure of 0 and 500 mbar, preferably 0.5 and 100 mbar, more preferably 1-50 mbar, most preferably 1 and 10 mbar.

If necessary, the temperature in the vessel during drying is controlled. The temperature is controlled to be on the one hand sufficiently high for the evaporation of the solvent, but on the other hand low enough so that the crystal cake is not dissolved by too much heating. In one embodiment, during static drying, the reaction vessel is held at a temperature between 0 and 50 °C; preferably, 0 and 40 °C, more preferably 10 and 30 °C, more preferably 20 °C and 40 °C, even more preferably 25 °C and 30 °C. Most preferably, the reaction vessel is held between 0 °C and 40 °C at a pressure of between 0,5 mbar and 10 mbar.

Under these process parameters, the crystal cake is dried, wherein the crystal surface is broken up preferably in approx. 2-hour intervals (1 to 3 h) by stirring briefly, e.g. at 25 RPM. Stirring duration time must not be longer than 10 s per stirring period.

### Dynamic Drying

A drying step beyond the static drying step may be performed. This further drying is denominated the "dynamic drying step". Here, stirring is performed.

The dynamic drying step is conducted after the amount of water is so low that even partial dissolution of the crystal mush, not even inside the crystal mush, is no longer possible. This is e.g. the case if the crystal solvent, preferably crystal water, is less than 5% higher than the percentage of crystal water (w/w) as compared to the crystal water in the perfect crystal stoichiometry.

Once such (partial) re-dissolution is no longer possible dynamic drying may be run to complete the drying step.

For "dynamic drying", the stirrer is preferably switched-on continuously.

The other process parameters may remain unchanged or may be modified within the parameter ranges specified for static drying.

Preferably, continuous stirring under controlled pressure and temperature is performed. More preferably, the stirring velocity may be increased with time or with the progress of drying. The temperature can be modulated during the dynamic drying step.

During the dynamic drying step, the following parameter ranges are preferred:
The dynamic drying step duration is 6 - 36 hours, more preferably between 8 and 24 hours, most preferably between 12 and 18 hours. The velocity of the stirring is 5 -50 RPM, preferably 25 - 50 RPM; the pressure conditions of the vacuum are 1 - 10 mbar, preferably 1 to 5 mbar; the temperature is 10 - 40 °C, preferably 20 - 40 °C, more preferably 20 - 30 °C.

The goals of the dynamic drying step are removal of excess water, precise adjustment of crystal water, obtaining of a homogenous batch of the crystal.

The end of the dynamic drying process may be marked by the vessel temperature being raised close to the temperature of the heater outside the vessel.

After reaching the target vessel temperature, the pressure is increased, e.g. set to 700 mbar. The obtained crystal powder is mixed well for at least 15 min at 50 RPM.

Then the vacuum is broken. A sample of the crystal powder is taken for analysis purposes, e.g. drying loss is determined.

### Setting the Stoichiometry

If the sample is too dry (i.e. contains less solvent then required), the process is continued with steam injection and subsequent post-drying.

Additional solvent can be inserted in case of "over drying" by an optional injection of solvent in gasoline form, preferably by a steam treatment, wherein water is added.

If the amount of solvent is still too high, a step of "post-drying" can be performed.

Therein the static and/or dynamic drying steps are continued, preferably sequentially, but in shorter time intervals than during the first static and/or dynamic drying steps. In a more preferred embodiment, only dynamic drying step is performed during "post drying" without a static drying step. Post-drying is carried out to adjust the residual moisture of the crystal powder according to the determined drying loss.

Otherwise, if the sample is neither too dry, nor too wet, drying is discontinued and the product is ready for discharging.

### Steam Injection

The vessel may be prepared for steam injection.

To do this, pure steam, e.g. with 0.8 bar overpressure, is injected into the vessel. Inside the vessel, conditions are as follows:
- Normal pressure
- Temperature of the heater outside the vessel is above room temperature
- Stirring is on

After steam injection, the crystal powder is continuously stirred for at least 10 minutes (e.g. at 50 RPM). After performing the steam injection, at least one post-drying cycle needs to be performed.

A sample of the crystal powder may be taken for analysis purposes, e.g. drying loss is determined.

### Post-drying

Post-drying may be carried out by continuing static and/or dynamic drying steps.

Preferably, post-drying is in 30 - 60 minute cycles according to the following conditions and parameters:
- Condenser trap temperature chosen as in the static drying step
- Pressure: vacuum, e.g. 5 mbar
- Temperature of the heater outside the vessel is above room temperature
- Stirring speed: at least 25 RPM

After each post-drying cycle, the drying loss may be determined. To do this, the stirrer is switched off and the vacuum is broken.

A sample of the crystal powder may be taken for analysis purposes, e.g. drying loss is determined.

### Product Withdrawal

After reaching the nominal target value range, the production method may continue by removing the final product ("powder phase") from the reaction vessel.

A suction device may be used to discharge the powder phase of the product via a connection flange of the vessel.

The suction device may designed like a vacuum cleaner with suction hose that is inserted into the reaction vessel. Via the suction hose, the final product is transferred into a product bag outside the reaction vessel. The product bag is implemented in a further vessel, which may be kept under inert gas.

The product bag is preferably air-permeable.

More preferably, the product bag is sterile or has been sterilized. The product bag may be sterilized by gamma irradiation.

The net weight of the product ("powder phase") is determined.

### Device of the present invention

In another aspect of the present invention, a device is provided comprising
a) a reactor (2) which can be heated and/or cooled, preferably from outside, which is connected via connection line (3c) to
b) a condenser trap (3), wherein the reactor (2) is further connected via connection line (1a) to
c) a vacuum unit (1) suitable for regulating the pressure and vacuum conditions in the reactor and the condenser trap (3).

The "vessel" referred to in the methods of the present invention may be the "reactor (2)" of the device of the present invention. The "vacuum unit" (1) may be or may include a conventional vacuum pump suitable to reach pressures between 0,1 and 1013 mbar. Preferably, the vacuum unit is suitable to draw vacuum and to create overpressure in the reactor (2) and/or the condenser trap (3). More preferably, the vacuum pump is resistant to acids and/or bases, more preferably the vacuum pump is a diaphragm pump. The "condenser trap" (3) is a chamber, through which the solvent in its gasoline form is guided and in which the solvent may be condensed and frozen. "Connection lines" allow for the transfer of substances, e.g. gases, fluids and solids. They are adapted to keep the connected units (e.g. reactor, condensing unit and vacuum unit) in a closed system, i.e. a system, which does not allow the unintended introduction of substances from outside these units to the inside and *vice versa.* Connection lines may be closed, if necessary. Connection line (1a) may be arranged to directly connect vacuum unit (1) and condenser trap (3) or may be arranged to directly connect vacuum unit (1) and reactor (2). Optionally there may be two connection lines (1a), to have both alternatives present in the device of the invention.

In a further embodiment of this aspect of the present invention, a device is provided comprising
a) a reactor (2) which can be heated and/or cooled from outside, which is in thermal contact with
b) a thermo unit (5), wherein the reactor (2) is further is connected via connection line (3c) to
c) a condenser trap (3), and wherein the reactor (2) is further connected via connection line (1a) to
d) a vacuum unit (1) suitable for regulating the pressure and vacuum conditions in the reactor and the condenser trap.

The "thermo unit" (5) is suitable for the heating and cooling of the reactor and the substances within the reactor. Preferably, the reactor is embedded into the "thermo unit", which is preferably a double jacket. Preferably, the thermo unit (5) is a heater. More preferably, the thermo unit (5) is a heater and cooler. Most preferably, the thermo unit (5) is a double jacket, e.g. a commercially available double jacket.

Optionally, the devices of the present invention further include a filter base area (4).

The "filter base area" (4) allows for the filtering of liquid-solid-mixtures in the reactor (2) and the subsequent removal of liquid, e.g. mother liquor, from the bottom of the reactor (2). The "filter base area (4) is preferably at the bottom of the reactor (2).

Preferably, the devices of the present invention include a reactor inlet (2a) and a reactor outlet (2b). If a filter base area (4) is present, the reactor outlet (2b) is below the filter base area, at the bottom of the reactor (2).

More preferably, the devices of the present invention include a stirrer (6), optionally driven by a stirrer engine (6a).

If distillation is to be performed, the condenser trap (3) may be used as cooling head. Preferably, a separate cooling head (7) connected to the reactor (2), is present in the device of the present invention. Gasoline solvent is (partially) condensed at the cooling head (7) or in the condenser trap (3) during distillation. The distillate may be collected in one or more glass vessels within or attached to the cooling head (7) in order to control the volume and finally to determine the concentration of the mother liquid.

The reactor (2) may contain an opening, aperture, or orifice, which can be opened and closed in order to introduce the substance to be crystalized or a solution of the substance to be crystalized, optionally other substances to be added. The opening, aperture or orifice may, but does not have to be the reactor inlet (2a). The chamber also contains at least one inlet and at least one outlet for allowing distillation of the solvent and/or applying vacuum. Preferably, the reaction vessel contains an inlet/outlet for an ice condenser: This inlet/outlet may be connection line (3c).

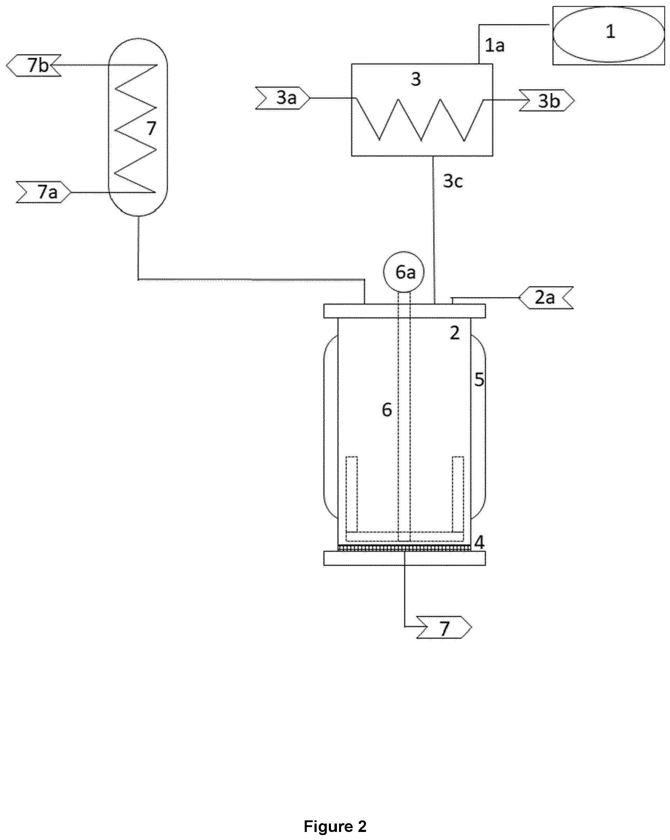

In a further aspect of the present invention, the device is the device as shown in Figure 2. This device comprises a vacuum unit (1), a connection line to vacuum unit (1a), a reactor (2), a reactor inlet (2a), a reactor outlet (2b), a condenser trap (3) with a thermofluid inlet (3a), a thermofluid outlet (3b) and a connection line (3c) from reactor to condenser trap, a filter base area (4), a thermo unit (5), a stirrer (6) with a stirrer engine (6a), a cooling head (7) with a thermofluid inlet (7a) and a thermofluid outlet (7b) and a connection line (7c) from reactor to cooling head.

All devices of the present invention may comprise one or more control elements, e.g. a processing unit, such as a computer, for automation and/or controlling the device, and the method conducted thereby.

In a further aspect of the invention, the devices of the invention further comprises a suction element (10).

The "suction element" (10) is an element suitable for removing substances from the reactor, in particular the final product. The suction element comprises a suction pipe (18) to be inserted into the reactor via an opening, e.g. the reactor inlet (2a) or a further opening of the reactor. The suction pipe (18) may be connected to a flexible tube (17). Through the suction pipe (18) and the flexible tube (17), the substance, e.g. the final product, may be suck out of the reactor (2). Sucking is preferably performed under inert gas.

In a preferred embodiment, the suction element (10) further comprises a glass vessel (15) connected to the flexible tube (17). More preferable, inside the glass vessel (15) is a filter bag (13), preferably a sterile or sterilized filter bag (13), connected to the flexible tube (17). The substance, e.g. the final product, may be transferred into the bag (13) without exposing the substance to the atmosphere surrounding the reactor (2). Even more preferably, bag (13) and reactor (2) can be connected to form a closed system..

In a further preferred embodiment, the suction element (10) further comprises a bag holder (16) to fix the bag in the glass vessel (15) and a perforate plate (14) at the bottom of the filter bag (16).

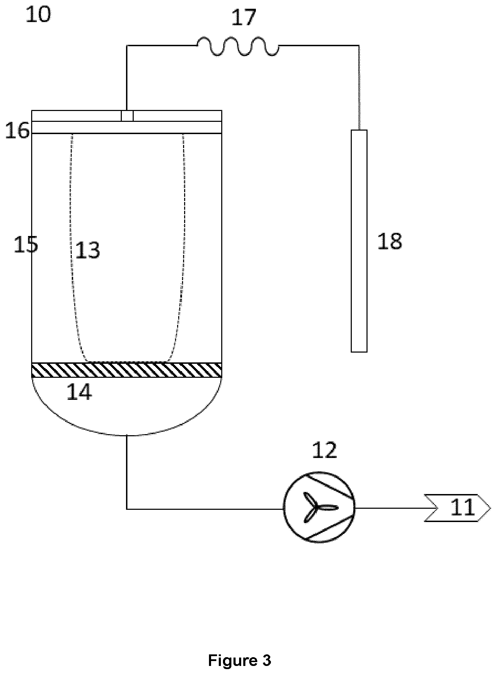

In an even more preferred embodiment, the suction element (10) is as shown in Figure 3, which comprises an exhaust (11), a suction fan (12), a bag (13), a perforated plate (14), a glass vessel (15), a bag holder (16), a flexible tube (17) and a suction pipe (18).

The substance, e.g. the final product may be transferred from the reactor into the suction element (10) under sterile conditions, preferably under aseptic conditions.

In another aspect of the invention, the devices as provided by the present invention are used for preparing crystals, preferably crystals in a homogenous form, more preferably crystals which contain a crystal solvent, most preferably crystal water. The devices may be used in any of the methods of the present invention.

In another aspect of the present invention, the devices of the invention contain a stirrer (6), which is resistant to corrosion. Preferably, the stirrer is from glass or ceramic, or from a synthetic material or plastic. More preferably, the stirrer is made of a material or at least contains a material on its surface, which is resistant against weak and strong hydrochloric acid. Examples are Hasteloy coated with PFA (Perfluoralkoxy polymer) or coated with any other Teflon based polymer or enamel coated steel.

Preferably, the geometry of the stirrer (6) is adapted to the reaction vessel. More preferably, the stirrer axis is in the centre of the reaction vessel (wherein the reaction vessel is cylindrical or almost cylindrical and the centre is the axis in the middle of the circle basis and perpendicular thereto). More preferably, the stirrer (6) leaves a low gap to the inner circumferential boundary of the side walls of the reactor (2) so that no crystal can adhere to inner boundary of the reactor (2). "Inner boundary" is another term for inner wall.

In another preferred embodiment, the blade of the stirrer is elongated in the z-direction i.e. in the direction parallel to the stirrer axis. The stirrer (6) may be a single or double anchor stirrer.

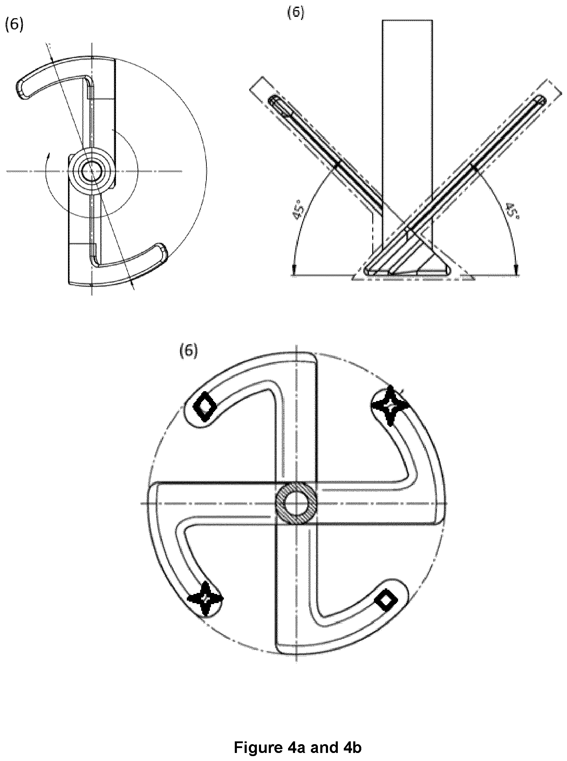

"Elongated" for a single anchor stirrer means that the stirrer comprises a pair of two pitched blades in an angle of 40° - 50°, preferably 45°, (opposite directions) to the stirrer axis, i.e. the z-direction, the blades elongating along the radius of the reactor. An example of such a stirrer (6), which is a single anchor stirrer, is shown in Figure 4a (top half of Figure 4). On the left of Figure 4a is a view along the stirrer -axis, from the top to the bottom of the reactor (2); on the right of Figure 4a is a side view of the stirrer showing the 45° angle between each stirrer blade and z- stirrer axis. The preferred stirring direction is also shown in Figure 4a: the stirring direction is always opposite to the 40° - 50°, preferably 45°, angle formed by the two pitched blades respective to the stirrer axis. In Figure 4a, this is clockwise. The effect of this blade arrangement and stirring direction is obtaining a most homogeneous crystal mass.

"Elongated" for a double anchor stirrer means that the stirrer comprises two levels of blade-arrangements. On the bottom the stirrer comprises a pair of two blades pitched in an angle of 40° - 50°, preferably 45°, (opposite directions) to the stirrer axis, i.e. the z-direction, the blades elongating along the radius of the reactor. On the second level, above the bottom, the stirrer comprises a pair of two further blades pitched in an angle to the z-axis of 40° - 50°, preferably 45°, the blades elongating along the radius of the reactor. The pair of blades of the bottom level behaves as a mirror image to the two blades on the second level. The support connecting the two further blades on the second level and the support connecting the two blades on bottom show an offset of 90° when viewed in the direction of the stirring axis, i.e. z-direction. When viewed in the respective planes perpendicular to the z-direction (i.e. xy planes), the blades on the bottom protrude upwards from the xy plane in which the support connecting the two blades is , the blades from the second level protrude from the xy plane in which the support connecting the two further blades is. The two levels of blade-pairs may overlap in z-direction as if they consists of one extended blade along the radius of the reactor. An example of such a stirrer (6) is shown in Figure 4b (bottom half). Figure 4b is a view along the z-axis, from the top to the bottom of the reactor (2) with the two supports connecting the two blade-pairs, perpendicular to each other, one vertical, one horizontal in the paper plane. The diamonds symbol the blades protruding from the paper plane upwards, the asterices symbol the blades protruding from the paper plane downwards. This configuration of an "elongated double anchor stirrer has the effect that no crust is formed at the bottom nor side walls of the reactor (2), thereby allowing for keeping the crystal cake as homogeneous as possible. The preferred stirring direction is in analogy to the direction shown in Figure 4a: the stirring direction is always opposite to the 40° - 50°, preferably 45°, angle formed by the respective two pitched blades respective to the stirrer axis. In Figure 4b, this is clockwise for both levels. The effect of this blade arrangement and stirring direction is obtaining a most homogeneous crystal mass.

In another preferred embodiment, the reactor (2) is made from glass or at least contains glass walls. The glass is preferably alkali-free, more preferably a borosilicate, most preferably borosilicate 3.3.

Preferably, the material of the reactor (2) is heatable and resistant to vacuum.

The bottom or top or side walls can be made from glass which is preferably alkali-free, more preferably a borosilicate, most preferably borosilicate 3.3; the bottom plate may be from enamel coated steel, PFA coated Hasteloy; the sealing gaskets may be made of PTFE.

The devices of the present invention may also contain, e.g. in closed connection, one or more further collection vessels beyond the reactor (2) to separate distilled liquid and/or mother liquor without the need of opening the device to the environment. In this way, the device can be confined from the environment. The collection vessels may be equipped with one or more sensors, e.g. radar sensors, e.g. for continuous measurement of liquid levels. More preferably, the devices of the present invention are used in a dust free and/or germ free and/or aseptic and/or sterile environment. For example, the device may be treated before use with water steam under over-pressure to reach a sterile environment.

In a more preferred embodiment, the devices are stable against oxidation, more preferably against the treatment with acids, most preferably against the treatment with strong acid. In another embodiment, the device is stable against the treatment with bases, preferably with strong bases.

"Device" and "apparatus" are synonyms in this specification.

### Crystals and substances to be crystalized

Crystals, which can be prepared be the methods of the invention and/or using the devices of the invention, are preferably inorganic crystals, more preferably inorganic salts. Typical inorganic salts are metal chlorides, metal oxides, metal halogenides, or metal pseudo-halogenides. Halogenides are salts from Fluorine, Bromine, Iodine, or Chlorine. Also, pseudo-halogenide salts are envisaged, such as rhodamine, cyanide or the like. Preferred metals are manganese, chrome, copper, zinc and iron.

Most preferred salts are

| | |
|---|---|
| - MnCl₂·4H₂O | Manganese(II) chloride tetra-hydrate |
| - Na₂MoO₄·2H2O | Sodium molybdate di-hydrate |
| - CuCl₂·2H₂O | Copper(II) chloride di-hydrate |
| - FeCl₂·4H₂O | Iron(II) chloride tetra-hydrate |
| - CrCl₃·6H₂O | Chromium(III) chloride hexa-hydrate |

Other crystals contemplated are:

| | |
|---|---|
| - NiCl₂·6H₂O | Nickel(II)-chloride hexa-hydrate |
| - CoCl₂·6H₂O | Cobalt(II) chloride hexa-hydrate |
| - FeCl₃·6H₂O | Iron(III) chloride hexa-hydrate |
| - ZnCl₂.2/4H₂O | Zinc(II) chloride di-/ tetra-hydrate |
| - C₁₂H₂₂O₁₄Zn | Zinc gluconate |

In another aspect, crystals contain selenium, such as selenite or protein containing selenium crystals. Examples are sodium selenite or sodium selenite pentahydrate.

In a further aspect, the crystals are semiconductor crystals such as crystals made of Ge, Si, α-Sn, C (Fullerene), B, Se, Te, Bi, Ca,Sr, Ba, Yb, P, S, I, GaP, GaAs, InP, InSb, InAs, GaSb, GaN, AIN, InN, AlₓGa₁₋ₓAs, InₓGa₁₋ₓN, ZnO, ZnS, ZnSe, ZnTe, CdS, CdSe, CdTe, Hg(1-x)Cd(x)Te, BeSe, BeTe, HgS, GaS, GaSe, GaTe, InS, InSe, InTe or the like.

In another aspect, the crystals are pharmaceutically pure, more preferably crystals meeting the standards of the pharmacopeia, even more preferably the API standards, most preferably crystals meeting the GMP standards. The GMP standards can be found from the International Council for Harmonisation of Technical Requirements for Pharmaceuticals for Human Use (ICH), e.g. under https://www.ich.org/page/quality-guidelines or from the EC, e.g. under https://ec.europa.eu/health/documents/eudralex/vol-4 en

In a further preferred embodiment, the crystal substance obtained by using the devices of the present invention and/or by applying the method of the present invention are of high purity, preferably of more than 90%, 95%, 96%, 97%, 98%, 99%, 99.9%, 99.99%, 99.999%, or 99.9999% purity (% = wt% = m/m).

More preferably, the crystalline substance is a pharmaceutical product, preferably the one which meets the requirements of the pharmacopoeia.

### LIST OF EMBODIMENTS

Embodiments of the invention are:
1. A method for manufacturing a crystalline substance, the method comprising the following steps of
   (i) applying vacuum to a vessel containing a solution of the substance to be crystallized to start crystallization, and
   (ii) drying an obtained crystal cake in the vessel, wherein during drying a condenser trap, preferably an ice condenser, connected to the vessel is used for removing solvent from the crystal cake, wherein solvent from the crystal cake is frozen in the condenser trap and thereby removed from the crystal cake.
   Preferably, the method employs vacuum crystallization of a solution of the substance to be crystallized. By drying the crystal cake, the crystalline substance ("final product") is obtained.
2. The method of embodiment 1, wherein vacuum is applied to the vessel during the drying step (ii).
3. The method of any of embodiments 1-2, wherein the obtained crystalline substance is an inorganic salt.
4. The method of any of embodiments 1-3, wherein the obtained crystalline substance is a pharmaceutically active compound.
5. The method of any of embodiments 1-4, wherein the obtained crystalline substance is a solvent containing crystal, preferably a hydrate, more preferably a metal salt hydrate, most preferably a metal chloride salt hydrate.
6. The method of any of embodiments 1-5, wherein the obtained crystalline substance is a metal salt hydrate selected from MnCl₂ 4H₂O, FeCl₂·4H₂O, CuCl₂·2H₂O, Na₂MoO₄·4H₂O or CrCl₃·6H₂O.
7. The method of any of embodiments 1-6, wherein the obtained crystalline substance is highly pure, pharmaceutically pure, preferably meets the standards of the Pharmacopeia or the API standards or the GMP standards.
8. The method of any of embodiments 1-7, wherein the obtained crystalline substance is of a purity as required for active pharmaceutical ingredients (APIs).
9. The method of any of embodiments 1-8, further comprising the following steps of
   a) initiating the crystallization by nucleation to obtain crystal nuclei,
      preferably by adding or inducing a crystallization seed to a supersaturated solution of the substance to be crystallized ,
      more preferably by cavitation, e.g. by creating gas bubbles of the solvent in the solution, by adding inert gas or by adding steam,
      most preferably by applying vacuum to the chamber containing the supersaturated solution under temperature regulation, wherein one of more gas bubbles of the solvent, nucleate(s) the supersaturated solution,
10. The method of embodiment 9, further further comprising
   b) after the formation of crystal nuclei, crystal growth by applying a decrease of temperature to favour crystal growth,
   preferably a decrease of temperature under normal pressure,
   more preferably under continuous decrease of temperature with a constant cooling rate or a stepwise decrease of temperature
   most preferably under normal pressure and under continuous decrease of temperature with a constant cooling rate or a stepwise decrease of temperature.
11. The method of embodiment 10, further comprising
   c) removing liquid from the grown crystals to obtain the crystal cake,
   preferably under pressure,
   more preferably under pressure and inert gas.
   most preferably under pressure and inert gas through a bottom valve of the vessel.
12. The method of embodiment 11, further comprising
   d) drying the crystal cake obtained after conducting step c), wherein during drying
   a condenser trap, preferably an ice condenser, connected to the vessel is used for removing solvent from the crystal cake, wherein solvent from the crystal cake is frozen in the condenser trap and thereby removed from the crystal cake.
   Preferably, this drying step is performed under vacuum. More preferably, the static drying is performed under vacuum and temperature control.
13. The method of embodiment 12, wherein the drying comprises
   d1) a static drying step,
   preferably a period of drying performed without the introduction of mechanical energy,
   more preferably a period of drying without continuous stirring or wherein only upon the formation of an incrusted layer on the crystal cake, the incrusted layer is broken by slow stirring,
   wherein even more preferably the incrusted layer is broken by slow stirring periods, preferably involving not more than 10, 5 or 3 revolutions per hour, slow stirring of less than 3 revolutions per hours, less than 2 revolution per hour, less than 1 revolution per 2 hours,
   wherein most preferably no stirring is performed for at least one or more intervals of more than 30 min, more than 1 hour or more than 2 hours.
   Preferably, static drying is performed under vacuum. More preferably, the static drying is performed under vacuum and temperature control.
   More preferably, the slow stirring continues up to the removal of the solvent, preferably water, to a degree wherein the amount of solvent is so low that a partial dissolution of the crystal cake is no longer possible
14. The method of any of embodiments 12-13, wherein the drying comprises
   d2) a dynamic drying step,
   preferably continuous stirring under controlled pressure and temperature is performed.
   Preferably, dynamic drying is performed under vacuum.
15. The method of any of embodiments 1-14, further comprising
   e) setting the stoichiometry of the crystal by
   e1) a final drying step to remove wet solvent,
   e2) solvent injection, wherein the solvent is injected in a gaseous form, to increase the degree of solvent or
   e3) a combination of e2) and e1).
16. The method of any of embodiments 1-15, wherein the solvent comprises or is water.
17. The method of any of embodiments 12 to 16, wherein
   d1) during slow stirring, or
   d2) during the whole drying step,
   vacuum and temperature are controlled so that the re-dissolution of the crystal cake is avoided.
18. The method of any of embodiments 1-17, wherein the condenser trap is a chamber, through which the solvent in its gasoline form is guided and in which the solvent is frozen.
   Preferably, the condenser is kept at a temperature between -20 and -50 °C, more preferably between - 20 and -40 °C, in particular if water is the solvent.
   More preferably, the condenser is an ice condenser and the solvent is water. Apart from water, in particular acidic alkaline aqueous solutions are envisaged as well.
19. The method of any of embodiments 12-17, wherein during the static drying, the Temperature of the vessel wall is held at a temperature between 0 and 50 °C, preferably 20 and 40 °C, more preferably 25 to 35 °C.
20. The method of any of embodiments 9 to 19, further comprising
   obtaining a supersaturated solution by distillation, preferably by vacuum distillation, before initiating the crystallization by nucleation.
21. The method of embodiment 20, further comprising
   re-dissolution of precipitate formed during the distillation.
22. A device for manufacturing a crystalline substance comprising
   (i) a reactor (2) which can be heated and/or cooled, which is connected via connection line (3c) to
   (ii) a condenser trap (3), which is preferably an ice condenser, and is connected via connection line (1a) to
   (iii) a vacuum unit (1) suitable for regulating the pressure conditions in the reactor (2) and the condenser trap (3).
23. The device of embodiment 22, further comprising a thermo unit (5) in thermal contact with the reactor (2).
   The thermo unit (5) may be used, e.g. in the methods of the present invention, to heat the device from outside.
24. The device of embodiment 22 or 23, further comprising a "filter base area" (4) in the reactor (2).
25. The device of any of embodiments 22-24, further comprising a stirrer (6).
   The stirrer may be a single or double anchor stirrer.
26. The device of any of embodiments 22-25, further comprising a cooling head (7) connected to the reactor (2).
27. The device of any of embodiments 22-26, further comprising a suction element (10).
28. Use of the device of any of embodiments 22-27 for performing a method of any of embodiments 1-21.
29. A compound produced by a method of any of embodiments 1-20.
30. A compound produced by a method of any of embodiments 1-20, wherein the compound is a crystalline substance that is highly pure, pharmaceutically pure, preferably meets the standards of the Pharmacopeia or the API standards or the GMP standards, more preferably meets the GMP standards for API's (Active Pharmaceutical Ingredients).
31. The compound of embodiments 29 or 30, which is a metal salt, preferably a metal salt hydrate.
32. The compound of any of embodiments 29-31, which is selected from Manganese(II) chloride tetra-hydrate, Sodium molybdate di-hydrate, Copper(II) chloride di-hydrate, Iron(II) chloride tetra-hydrate, Iron(II) chloride tetra-hydrate, Iron(II) chloride tetra-hydrate, Iron(II) chloride tetra-hydrate, Iron(II) chloride tetra-hydrate, Chromium(III) chloride hexa-hydrate, Nickel(II)-chloride hexa-hydrate, Cobalt(II) chloride hexa-hydrate, Iron(III) chloride hexa-hydrate, Zinc(II) chloride di-/ tetra-hydrate or Zinc gluconate.
33. A metal salt that is highly pure, pharmaceutically pure, preferably meets the standards of the Pharmacopeia, the API standards, or the GMP standards.
   Preferably, the metal salt meets at least two, more preferably all three of these standards. Most preferably, the metal salt meets the GMP standards for API's (Active Pharmaceutical Ingredients).
34. The metal salt of embodiment 33, which is selected from Manganese(II) chloride tetra-hydrate, Sodium molybdate di-hydrate, Copper(II) chloride di-hydrate, Iron(II) chloride tetra-hydrate, Iron(II) chloride tetra-hydrate, Iron(II) chloride tetra-hydrate, Iron(II) chloride tetra-hydrate, Iron(II) chloride tetra-hydrate, Chromium(III) chloride hexa-hydrate, Nickel(II)-chloride hexa-hydrate, Cobalt(II) chloride hexa-hydrate, Iron(III) chloride hexa-hydrate, Zinc(II) chloride di-/ tetra-hydrate or Zinc gluconate.
35. The metal salt of embodiment 33 or the compound of embodiment 31, which is selected from MnCl₂ 4H₂O, FeCl₂·˙4H₂O, CuCl₂·2H₂O, Na₂MoO₄·4H₂O, CrCl₃·6H₂O, NiCl₂·6H₂O, CoCl₂·6H₂O, FeCl₃·6H₂O, ZnCl₂·4H₂O, ZnCl₂·2H₂O, and C₁₂H₂₂O₁₄Zn.
36. A method for purifying a crystalline substance comprising
   (i) dissolving a crystalline substance to be purified,
   (ii) a step of applying vacuum to a vessel containing a solution of the substance to start crystallization, and
   (iii) a step of drying an obtained crystal cake in the vessel, wherein during drying
      a condenser trap, preferably an ice condenser, connected to the vessel is used for removing solvent from the crystal cake, wherein solvent from the crystal cake is frozen in the condenser trap and thereby removed from the crystal cake.
37. The method of claim 36, which may contain any steps of any of the embodiments 1-21.

### Examples

### Example 1: The Concept of the Preparation of MnCl₂·4H₂O crystals

### 1.1 Purification of inorganic contaminants via crystallisation

Removal of potential existing inorganic contaminants in the salt (here: MnCl₂) solution was achieved by vacuum-cooling-crystallisation and subsequent separation of the mother liquor from the crystal cake. The basic idea behind this concept is purification. Crystals in general are very pure because of their highly ordered and well-defined arrangement - in theory most of the impurities stay in solution.

The crystallisation technique requires a defined, relatively high concentration of the MnCl₂ solution. In this concentration range the so-called metastable zone of MnCl₂ solution is situated. This zone describes a phase of the mother liquor with a defined temperature that is supersaturated - but has not yet responded with spontaneous nucleation with a certain finite time.

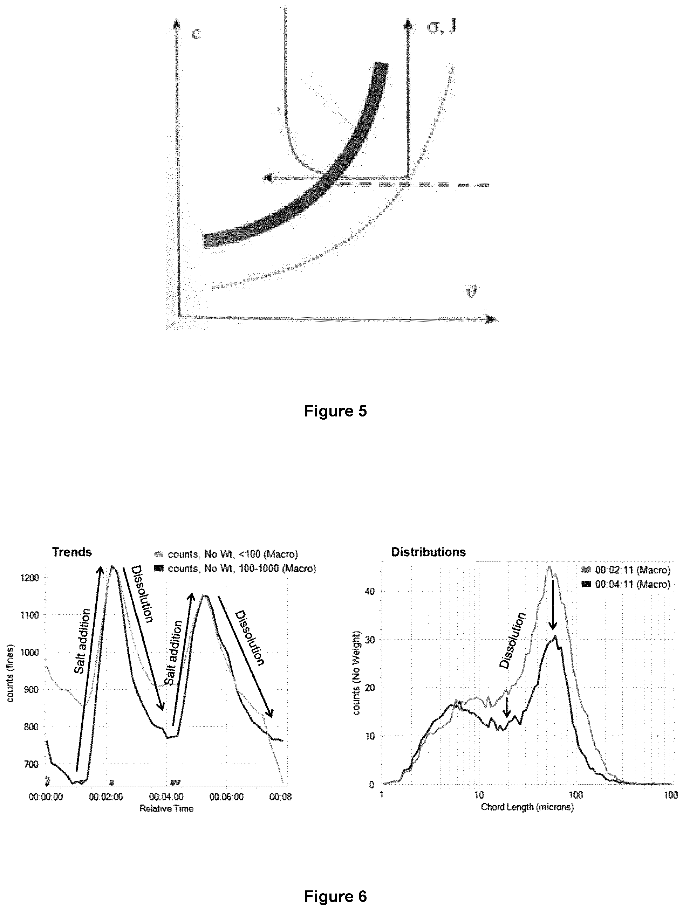

Figure 5 shows the visualisation of the cooling crystallisation by highlighting the metastable zone. The inserted small picture gives information about the nucleation process. Shown is the schematic representation of the width of the metastable zone (thick, broad line) for the case of a cooling crystallisation along the path represented by the arrowed line (big picture). The system crosses the saturation line, dotted line, and becomes supersaturated. Nucleation rate becomes greater than zero. The exponential nature leads to near negligible nucleation rates below and a steep increase above a critical supersaturation. When the supersaturation reaches its critical value for nucleation rate to become observable, any further cooling will dramatically increase the nucleation rate, so that a macroscopically visible nucleation event occurs (small picture). c (concentration), ϑ (temperature), J (density of nuclei) and σ (surface tension) - arbitrary units (W. Beckmann, "crystallization - Basic Concepts and Industrial Applications" WILEY-VCH, 2013).

Initially, in lab-scale the crystallisation process was developed with a sensor that measures in-situ the particle size, particle counts and distribution. The feasibility of monitoring these parameters *via* Focused Beam Reflectance Measurement in collaboration with Mettler-Toledo was successfully shown.

Figure 6 shows two graphs that were recorded with the ParticleTrack sensor. The addition and dissolution of MnCl₂·4H₂O crystals can be monitored in real time. On the left side, addition of MnCl₂·4H₂O crystals correlates to a particle counts increase of zero to > 1200 after approximately 120 seconds. Then, from 120 seconds to four minutes dissolution of MnCl₂ occurs and particle counts decreased (< 800). After the time of four minutes same procedure is repeated, MnCl₂·4H₂O was added, particle count increased, dissolution occurred and particle count decreases again. The particular sensor was very important to fundamentally understand the crystallisation of MnCl₂ in water. In production-scale it was not necessary to use this sensor.

### 1.2 Metastable zone

Pre-tests were conducted to investigate the metastable zone of MnCl₂·4H₂O at 20 °C. The following procedure was conducted:
A certain amount of MnCl₂·4H₂O crystals were re-dissolved in water to achieve different concentrations, ranging from 20 to 55 % (m/m). The next step was to check whether the solid material was dissolved or not under stirring at 20 °C. If there was still undissolved solid MnCl₂·4H₂O, that solution was heated up to 60 °C and then dissolved. Then, the solution was slowly cooled down to 20 °C and checked for crystals, see following table 1 for the results.

**Table 1: Overview of the stable, metastable and unstable zone of the MnCl₂ solution at 20 °C depending on the concentration.**

| Concentration of the MnCl₂ solution % (m/m) | Checking the solubility of MnCl₂ in water at 20 °C | Checking the stability of a cooled down oversaturated solution to 20 °C |
|---|---|---|
| 20 | yes | stable |
| 30 | | |
| 32 | | |
| 34 | | |
| **36** | no | **metastable** |
| **38** | | |
| **40** | | |
| **42** | | |
| **44** | | |
| **46** | | |
| **48** | | |
| 50 | | unstable |
| 55 | | |

Concentrations of MnCl₂ are reproduced in the left column. The column in the middle indicates solubility for the concentration at 20 °C. On the right side, stability of the system is displayed (stable, metastable and unstable). Between 20 and 34 % (m/m) a stable area is obtained, that means no undissolved material was observed at 20 °C. From 34 to 36 % (m/m) a limit is reached, that states a transition into a metastable region. That metastable zone, from approximately 36 to 48 % (m/m), describes an area, where the MnCl₂ mother phase is supersaturated, but has not yet responded with spontaneous nucleation, within a certain finite time (column in the middle). Here, at 20 °C the nucleation can be induced specifically. From 48 % (m/m) upwards an unstable region prevails, where spontaneous crystallisation occurs.

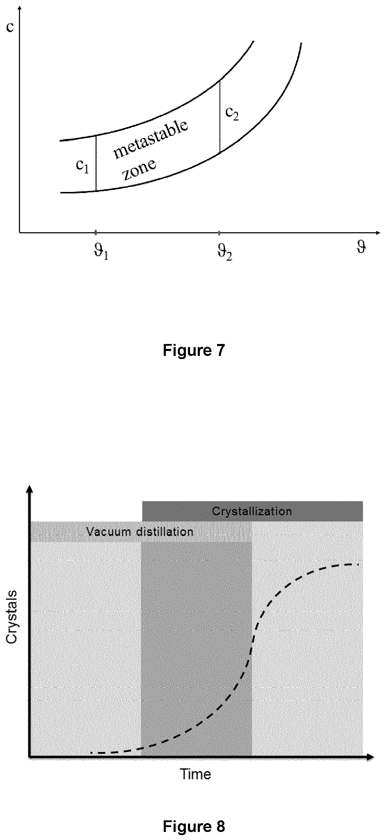

Figure 7 is a schematic representation of the metastable zone. Two distinct temperatures ϑ₁ and ϑ₂ are highlighted. By taking a closer look at Figure 7, the metastable zone depends on two main reaction parameters, concentration (c) and temperature (ϑ). By raising the temperature from ϑ₁ and ϑ₂ the whole concentration range of the metastable zone shifts upwards to higher concentration. The lab-scale experiments were conducted at a controlled temperature of 20 °C and a concentration range of 36 to 48 % (m/m) results. As the temperature will be increased in production-scale in order to maximise the yield, the metastable concentration shifts analogue upwards to higher concentrations. Pre-testing indicates the feasible concentration range for production-scale of 50 % (m/m) for the crystallisation process. In order to reach the designated concentration, a concentration *via* distillation is necessary to increase the initial concentration of 30 to 50 % (m/m).

### 1.3 Concentration via vacuum distillation

Various lab-scale experiments regarding the distillation were conducted. These tests showed that reasonable distillation performance can be achieved at approximately 40 - 50 °C (solution temperature) and 50 - 60 mbar vacuum. The rate of distillation was between 0.5 - 2.4 ml/min.

Scale-up and transfer of the vacuum distillation process into production-scale was performed. Process control parameters were finally defined according to the lab-scale parameters, e.g. temperature of heat exchanger medium, vacuum and temperature and concentration of mother liquor. The crystallisation reactor consists of relatively thick glass material which limits the heat transfer, therefore the external heat supply for the double walled reactor must be increased to get the necessary vaporization energy into the solution.

The dry substance of the MnCl₂ solution after distillation shows concentrations between 49 and 52 % (m/m) (average: 51 % (m/m)). A small amount of hydrochloric acid (pH 0.4 and 579 µS/cm) was transferred into the distillate during the process. The required concentration was controlled by continuous measurement of the distillate volume.
Initially, a MnCl₂ solution volume of 20 I was used. However, due to heat exchange surface and stirrer geometry of the crystalliser the volume has been increased to 26 I. Due to the relatively high temperature of the inner crystallisation reactor surface incrustation occurs at the end of the distillation process. Finally the concentrated MnCl₂ solution was heated to 70 - 80 °C under atmospheric pressure in order to remove the crust from the inner reactor surfaces and dissolution in the reactor content.

### 1.4 Crystallisation

Based on the initial performed lab-scale crystallisation experiments regarding the nucleation process different methods were tested in lab-scale to apply external stimuli to the system. For instance ultrasound, vibration and induction of gas bubbles. A reasonable technique was applying vacuum to the heated solution during stirring in order to generate extensive and small gas bubbles. Local cavitation allowed nuclei to overcome their kinetic barrier. By generating a vacuum (50 - 60 mbar) for a short time the nucleation process started and crystal growth occurred afterwards (1 - 5 min). Temperature of the solution decreased from 70 - 80 °C to 45 - 50 °C. It has to be noted that lowering the pressure under vacuum has a side effect at the same time, which is cooling down the solution / crystal suspension temperature.

In order to optimise crystal growth after successful nucleation lab-scale experiments regarding the cooling phase were conducted. The crystal suspension was cooled down gradually to 5 °C under vacuum and stirring (agitator speed: ∼25 RPM, vacuum: 300 mbar, cooling rate: approximately 0.1 °C/min). During the cooling phase crystal formation and crystal growth, respectively, continues directly. This process step consists of a controlled cooling process. Cooling of the solution will be initiated in order to decrease the solubility of the MnCl₂ solution as low as possible in order to maximise the recovery of crystal mass.

### Example 2: Lab-scale production of MnCl₂ 4 H₂O

### 2.1 Product synthesis

For the synthesis of MnCl₂·4H₂O starting materials are metallic manganese and concentrated hydrochloric acid. A successful preparation results in a MnCl₂ solution with determined concentration. In general, all reaction solutions during the whole manufacturing of the API trace elements will be filled and stored in sterile process bags.

This synthesis solution is being filtrated several times. A pre-filtration (0.6/0.2 µm filter) to separate particles and suspended solids from the solution, is followed by ultrafiltration (filter specification: 10 kDa) in order to filter out endotoxins and organic impurities. The last filtration step is a bacterial filtration (pore size: 0.2 µm) to get a germ-free solution.

The next processing step is purification by crystallization to eliminate other metal ions than manganese. The crystals are being rinsed afterwards if necessary.

Drying completes the whole process chain. The correct hydrate shell of four water molecules per MnCl₂ needs to be set. This will be achieved by an in-process control (IR moisture balance). Then, the final product is being discharged in primary and secondary packaging.

The synthesis results in a reaction solution of MnCl₂ with a concentration of 30 wt-% (m/m).

Chemical equation of the MnCl₂·4H₂O-synthesis:

Mn + 2 HCl + 4 H₂O → MnCl₂ x 4H₂O + H₂

Mn of American Elements has a purity of 99.98% based on metals basis. Manganese is in the form of pieces with size of ≤ 13 mm. A certificate of analysis is available. The concentrated hydrochloric acid complies with Ph. Eur. ("Salzsäure 37 % EMPROVE^{®} exp Ph. Eur., BP, JP, NF geeignet für die Verwendung als Exzipient").

An important parameter that allows to track the concentration in-situ and to get us straight into the crystallization process is conductivity. As conductivity and concentration depend on each other, a certain reaction concentration can be set via conductivity, for instance to initiate the crystallization process.

### 2.2 Finding stable materials for reaction vessel, stirrer and material in contact with the product solution

As the transition metal salt solutions are very acidic and corrosive, material that is in direct contact with either the solution (reaction vessel, bag with connections, stirrer, filter paper, electrodes and all seals) or its gas phase (reaction vessel, cover plate and distillation apparatus) has to provide a chemical resistance. Potential materials have been tested and following alloy is suitable.

Hastelloy is a well-known alloy of mainly Ni, Cr and Mo. "Hastelloy C-22" was checked for chemical resistance. A polished piece of that alloy was tested on a concentrated MnCl₂ solution (concentration: 30 wt-%). Experiment condition: One solution was kept at 20 °C (72 h) and the other was heated up to 60 °C (for 1 hour). No visual change of the surface has been detected.

All main metals of Hastelloy - except Mn - were analyzed via ICP-MS technique (see Table 2 for details). Since the medium for analysis is a highly concentrated MnCl₂ solution it is not applicable to measure the Mn assay at this point.

Table 2 can be divided into four parts. The column on the left shows all analyzed metals. Then, from left to right following concentrations are given in ppm: Blank (MnCl₂ solution only), "Hastelloy" at different temperatures (Hastelloy in a 30 wt-% MnCl₂ solution) and the difference between Blank and "Hastelloy".

**Table 2: The "Hastelloy C-22" piece was put in a 30 wt-% MnCl₂ solution and tested via ICP-MS for various metals. The blank is MnCl₂ solution without alloy.**

| | Blank | Hastelloy (20 °C) | Hastelloy (60°C) | Difference to blank (20 °C) | Difference to blank (60 °C) |
|---|---|---|---|---|---|
| Element | Assay [ppm] | | | | |
| Ni | 3 | 1 | 22 | -2 | +19 |
| Cr | 4 | 2 | 10 | -2 | +6 |
| Mo | 3 | 3 | 7 | 0 | +4 |
| W | <1 | <1 | 1 | <1 | 1 |
| Co | 4 | <1 | <1 | <1 | <1 |
| Fe | 10 | 4 | 7 | -6 | -3 |
| Al | 6 | <1 | <1 | <1 | <1 |
| V | <1 | <1 | <1 | <1 | <1 |

The blank shows very low overall concentrations with < 10 ppm. For the solutions with alloy values are comparable low with maximum 22 ppm. ICP-MS analysis results in a very low dissolution of metals out of the "Hastelloy C-22". The difference between samples with Hastelloy and blank lies only between -6 and +19 ppm. At that time, we conclude that this alloy is suitable as a material for direct contact with MnCl₂ solutions.

Sterile process bags were identified to be useful for transferring metal salt solutions.

The sterile process bags supplier used were from ACF (Applied Critical Fluids GmbH, manufacturer: Sartorius Stedim Biotech). The so called "Flexboy" bag consists of different layers (S71 film structure). Outer layer: EVA, ethylene vinyl acetate copolymer. Gas barrier layer: EVOH, ethyl vinyl alcohol. Fluid contact layer: EVA, ethylene vinyl acetate copolymer. EVA meets the requirements of the chemical resistance of the metal salt solution.

In order to verify the stability of the synthesis solution, a 30 wt-% solution of MnCl₂ was put in different containers, i. e. glass vessels, PP tubes and process bags. After 2 months no sign of any interaction between product and material surface and no precipitation of manganese(II) chloride or any other solid occurred. The light pink color stayed the same.

### 2.3 Purification

Purification by crystallization and the investigation of the metastable zone were as described in Example 1.

### 2.4 Distillation

In order to crystallize in production-scale, we have first to distill the initial solution (concentration: 30 wt-%, m/m) to a volume that corresponds to a concentration between 36 and 48 wt-%, which is the metastable zone at 20°C. While distilling the metastable zone of a MnCl₂ solution shifts to a region of higher temperatures.

Initially, we performed a lot of experiments that had defined processing steps - distillation, nucleation and crystallization. But the main drawback of this clear separation is the bad yield of crystals. The background is following: By distillation of an initial 30 wt-% MnCl₂ solution, the concentration increases gradually while distilling. A certain concentration range will eventually be reached where manganese(II) chloride crystallizes during distillation (temperature of the solution: 45 - 50 °C, 50 - 60 mbar absolute pressure). Then, the distillation would be finished because of the separated processing steps. The main problem is that the remaining volume of water is too large. As the solubility of MnCl₂ is even at 0 °C still remarkably high with 63.4 g/100 g water (39 wt-%), the larger the remaining volume is the greater is the amount of MnCl₂ still in solution and not crystallized. As a consequence we have changed our strategy into flowing processing steps: Distillation, controlled crystallization and further distillation ("vacuum crystallization") is shown in Figure 8.

Figure 8 is a schematic presentation of two combined processing steps, vacuum distillation and crystallization. While distilling the amount of crystals is continuously increasing. After a certain amount of time distillation is stopped and cooling down the solution will be applied afterwards in order to maximize the yield of MnCl₂·4H₂O crystals. The initial reaction solution with a concentration of 30% (m/m) gets concentrated and crystallization begins (darker grey area). As the amount of crystals increases over time vacuum distillation continues to an end concentration between approx. 49 and 52 wt-%. Then, the crystallization goes on at normal pressure via cooling down the reaction temperature to 5 °C.

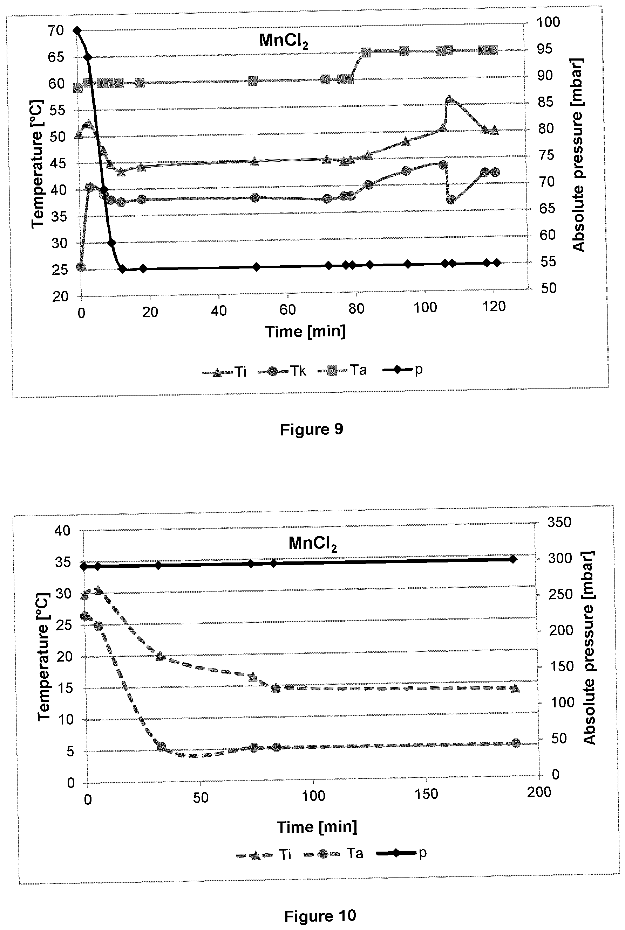

Lab-scale experiments showed that reasonable distillation performance can be achieved at approx. 60 °C (temperature of the double jacket), approx. 40 - 45 °C (solution-temperature) and 50 - 60 mbar absolute pressure. The rate of distillation lies between 0.5 - 2.4 ml/min (average: 1.3 ml/min). The lab-scale experiments took 52 to 129 min (average: 83 min). At this point it is hard to estimate the duration of the production-scale process because the equipment is not linear upscaleable. Dry substance of MnCl₂ after distillation show concentrations between 49 and 52 wt-% (average: 51 wt-%). Figure 9 shows a typical distillation experiment.

Ti stands for the solution temperature, Ta for the double jacket temperature, Tk for the temperature of the highest point in the distillation apparatus and p for absolute pressure.

Process control parameters for distillation in production-scale are stirrer speed, pressure, temperature of the solution, temperature of the reflux condenser, temperature of the double jacket and concentration (measured via conductivity).

### 2.5 Crystallization

After a successfully performed nucleation (see Example 1 for details), crystallization is the next processing step. This step consists of two parts. Part 1 is a continued vacuum distillation and part 2 a controlled cooling process, see Figure 8 for a schematic presentation.

As already stated in Example 1, after a successfully performed distillation and nucleation, the distillation must be continued in order to optimize the yield of crystals and let the volume of the residual solution be as little as possible. Afterwards, cooling of the sample will be initiated to decrease the concentration of MnCl₂ as low as possible. In both parts crystals are growing because of decreased solubility of dissolved MnCl₂ by decreasing the volume and lowering the temperature.

In this second part of the crystallization the reaction solution was cooled down gradually to 5 °C under vacuum (p = 300 mbar, cooling rate: approx. 0.1°C/min) and let it stand at this particular temperature for at least 2 hours. No further distillation occurs at this point. Figure 10 shows a typical cooling experiment.

In Figure 10, Ti stands for the solution temperature, Ta for the double jacket temperature and p for the absolute pressure.

Different values are given in the graph: Inner temperature (Ti), temperature of the double jacket (Ta) and absolute pressure. Environmental condition was 300 mbar in this specific crystallization experiment. We conducted several experiments with a process duration ranging from 41 to 190 min. The inner temperature was gradually lowered down from 29.8 °C (end of vacuum crystallization) to 13.9 °C (temperature of double jacket 5 °C). In production-scale, a cooling of the distillation temperature of 45 - 50 °C to 5 °C will be preliminarily applied.

Process control parameters for the crystallization in production-scale are temperature of the crystal suspension, stirrer speed, duration and temperature of the double jacket.

The end of the crystallization is preliminary set to approx. 11.6 - 14.6 wt-% rest water content (on top of 36.4 wt-% water of crystallization) which adds up to a total 49 - 52 wt-% water. By IR balance technique percentage of water can be determined (target dry substance range: 48 - 51 %S).

Next step in lab-scale was to drain the residual mother liquor under vacuum via Nutsche filter and separate crystals from the mother liquor, which is the main purification step. Then, the residual solution was analyzed.

Process control parameters for the crystallization in production-scale are conductivity, temperature of the solution, stirrer speed and temperature of the double jacket. IR balance technique determines the end of the process (target: 36.0 - 37.5 wt-% water).

After a successful crystallization in production-scale, the residual solution will be drained under approx. 1 bar overpressure (N₂).

### 2.6 Particle size

In order to control the crystallization process in production-scale, particle size, shape and distribution has to be monitored in real time. We have successfully shown the feasibility of monitoring these parameters by Focused Beam Reflectance Measurement in collaboration with Mettler-Toledo. The respective electrode is called ParticleTrack sensor. For details, see Example 1 above

### 2.7 Removal of residual solution

Based on several lab-scale experiments regarding purification of wet crystals, removal of the residual solution is applicable. Rinsing with diluted Hydrochloric acid is not practicable due to a MnCl₂ weight loss of >54 % (m/m). Average loss of removing the residual solution is 6.2 %.

In production-scale the residual solution will be drained under vacuum via Nutsche filter (pore size: 60 µm, material: PTFE).

### 2.8 Drying

Drying wet crystals in lab-scale was achieved by heating up the double jacket (40 - 50 °C) and performing vacuum drying (approx. 30 - 100 mbar).

A crucial point is the geometry of the stirrer, which ensures the homogeneity of the solid material by applying an axial mixing. An arrangement of the impeller with four pitched blades (angle: 45°) meets this requirement and will therefore be applied in production-scale. Stirrer speed was 30 - 140 rpm and the duration of the whole lab-scale process was 75 - 282 min.

Subsequently, the degree of dryness was validated with IR balance technique.

### 2.9 Final product and primary packaging

We obtained dried crystals in a yield between 68 and 93 % (average: 82.6 %) with regard to manganese in several experiments (see Table 3). In each experiment the whole process chain was applied, meaning the studies based on starting materials of American Elements and every step was conducted in the given order (synthesis, filtration and crystallization). The identity on Mn was indirectly verified with AAS and ICP-MS. Presence of Cl⁻ was determined as a white precipitate after adding silver nitrate (re-dissolving in NH₃). Water content measured with IR balance technique resulted in 36.5 - 38.0 % H₂O (theoretical value: 36.4 wt-% water).

**Table 3: Overview of losses and yields regarding the main processing steps of lab-scale experiments.**

| Experiment no. | 1 | 2 | 3 | 4 | 5 | 6 | Average |
|---|---|---|---|---|---|---|---|
| Overall yield [%] | 67.8 | 83.9 | 87.1 | 82.7 | 81.2 | 92.9 | 82.6 |

**Table 4: Proof on the identity on MnCl₂.**

| | | |
|---|---|---|
| Ion | Mn²⁺ | Cl⁻ |
| Method | AAS / ICP-MS | aqueous AgNO₃ solution |
| Result | Identity confirmed | White precipitate, that is re-dissolvable in NH₃ |

The planned batch size for production-scale is 11.6 kg. Preliminary total yield can be estimated to approx. 82.6 %.

### 2.10 Stability of primary packaging

After a successful process chain, the discharge of product in primary and secondary packaging is the final processing step in production-scale. Primary packaging material is LDPE (low-density polyethylene) and secondary aluminium foil with zip lock. The supplier of primary (Lorafol, Losch Folien) and secondary packaging (DaklaPack) is already identified.

In order to verify the stability of primary and secondary packaging pre-tests were conducted. Therefore, purchased MnCl₂·4H₂O was stored for 4 months under following conditions: 25 °C and 60 % humidity. The packaging material was used as above described. Compared to the blank no visual changes of the final product neither of the packaging materials have been detected.

### Example 3: industrial scale production of MnCl₂ 4 H₂O

### 3.1 Distillation

A solution of MnCl₂ ▪ 4 H₂O is created. The solution is concentrated by vacuum distillation to obtain a supersaturated solution. The supersaturated solution shall have a concentration in the metastabile zone identified in the lab-scale experiments (see Example 2).

The MnCl₂ solution is inserted into the reaction vessel (glass reactor) using a suction hose set. The distillate quantity is calculated to control the vacuum distillation. The nominal concentration of metastable mother liquor 50 % (m/m) is used as a basis. The MnCl₂ ▪ 4 H₂O is dissolved in hydrochloric acid. The solution is filtered using an ultra-filter to remove impurities.

The distillation is carried out at a pressure of 50 mbar ("vacuum at 50 mbar") and a temperature of the double jacket surrounding the reaction vessel of 135 - 145 °C. The temperature of the solution is between 40 - 50 °C.

During the whole crystallization process, samples may be taking via a sampling flange of the glass reactor using a sterile suction device for sampling the liquid, crystal mush (i.e. crystal cake) or crystalline samples from the glass reactor. For liquid sampling, a syringe may be used as well. A first sample may be taken during distillation from the non-saturated, saturated or supersaturated solution and/or after distillation from the obtained supersaturated solution.

### 3.2 Re-Dissolution of Precipitate

The distillation is stopped after reaching the calculated distillate quantity by breaking the vacuum. The deviation from the calculated value of the distillate quantity is chosen not to exceed ± 1 %.

If solid material precipitates during distillation, this material needs to be re-dissolved in order to get a homogenous supersaturated solution.

To do this, after distillation, the preparation is heated to 70 - 80 °C (jacket temperature 135 - 145 °C, no vacuum) to dissolve any precipitates that may have occurred in the reactor, in particular precipitates at the wall of the reaction vessel.

Alternatively or additionally, steam might be injected to dissolve any precipitates. Steam injection was not necessary, here.

### 3.3 Nucleation

After dissolving potential amounts of precipitate, the crystallization is initiated by nucleation in the supersaturated solution.

To do this, the double jacket temperature is reduced to 1 °C. The pressure is set to 50 mbar. Due to the vacuum, the preparation begins to boil and is cooled down. The stirring speed is set to 50 RPM. Gas bubbles of the boiling solvent act as crystal seeds.

After cooling down the preparation to approx. 40 °C (by reducing the jacket temperature to 1°C), the vacuum is broken and the stirring speed is reduced to 25 RPM.

### 3.4 Crystallization Phase

After nucleation, the crystallization phase is run under normal pressure.

The crystallization phase is performed by cooling the solution to 10 °C (double jacket temperature: 1°C; cooling rate: -0.3 to -2.5 °C/min).

The solution is allowed to continue crystallizing for at least 12 hours while stirring with 25 RPM at 10 °C (± 1 °C).

### 3.5 Separation of the mother liquor

After crystallization is terminated, the mother liquor is separated via the bottom valve of the reaction vessel using nitrogen overpressure (not more than 1500 mbar).

To speed up the draining process, the stirrer may be rotated briefly (25 RPM), if necessary.

The mother liquor is removed under aeration with nitrogen.

The change in color of the crystal cake from dark pink to light pink is monitored as an indicator of the degree of dehumidification.

To determine the residual moisture, samples of the crystal cake may be taken for the determination of the loss on drying. As long as the target range (here: 41-44wt%) of the liquid in the crystal cake is not reached, nitrogen gassing of the crystal cake is continued to reach the target range.

### 3.6 Static Drying

Unexpected problems arose in the first attempts to dry the obtained crystal cake. The solvent present in the atmosphere in the reaction vessel led to the repeated and uncontrolled re-dissolution of crystals during drying as originally planned (see Example 2 above), thus spoiling the crystal cake. In practice, stirring and heating of the crystal cake at start of the drying process turned out not to be possible. The residual solvent in connection with applied heat energy together with mechanical agitation often even leads to a complete dissolution.

It, thus, turned out to be necessary to modify the drying process. At the end of several failed attempts, a condenser trap was implemented, here by way of an ice condenser.

Still (partial) re-dissolution of the crystal cake is a risk. The inventors identified that the introduction of mechanic energy needs to be avoided during the first phase of the drying. Stirring needs to be minimized as far as possible and is only executed to homogenize the crystal cake as far as necessary. Thus, the first phase is called "static drying".

To start the static drying phase, the ice condenser is set to -20 °C. The crystal cake is stirred briefly to break up the surface (max. 1 turn). The temperature of the double jacket (DP) is set to 1°C. The pressure is set from normal pressure to 5 mbar and vacuum is drawn. The temperature of the double jacket (DP) is set to 30 - 40 °C.

Under these process parameters, the crystal cake is dried for 6 hours, wherein the crystal surface is broken up in approx. 2-hour intervals (1 to 4 h) by stirring briefly at 25 RPM. Stirring duration time must not be longer than 10 s per interval.

Then static drying is continued, for approx. 6 hours (± 1 h), while maintaining the stirring intervals. To do this, the temperature of the double jacket is set to 30 °C.

### 3.7 Dynamic Drying

Once (partial) re-dissolution is no longer possible - given the lowering of the liquid content in the crystal cake during static drying - dynamic drying may be run to complete the drying step. For dynamic drying, the stirrer is switched-on continuously. The other process parameters remain unchanged: Ice condenser temperature TEK: -20 °C, Pressure: 5 mbar, Temperature of the double jacket (DP): 30 °C, stirring at 25 RPM.

The crystal cake is dried under these process parameters for at least 3 hours. The end of the dynamic drying process is marked by the reactor temperature being raised close to the double jacket temperature:
- Target reactor temperature: 24 - 28 °C

After reaching the target reactor temperature, the pressure is set to 700 mbar. The crystal powder is mixed well for at least 15 min at 50 RPM.

Then the vacuum is broken for sampling. The ice condenser is defrosted and the liquid drained completely from the system. A sample of the crystal powder is taken for analysis purposes, e.g. drying loss is determined.

### 3.8 Setting the Stoichiometry

If the sample taken is still too wet (target value above 37,6wt%), post-drying is carried out to adjust the residual moisture of the crystal powder according to the determined drying loss.

If the sample is too dry (target value ≥ 36.0 and ≤ 37.0 %) the process is continued with steam injection and subsequent post-drying.

If the sample is 37.1 - 37.5 % drying is discontinued and the product is ready for discharging.

### 3.8.1 Steam Injection (optional)

The glass reactor is prepared for steam injection. To do this, the condensate is drained from the steam supply and pure steam with 0.8 bar overpressure is injected into the reactor via the product line under the following conditions and parameters:
- Ice condenser temperature at 50 °C
- Normal pressure
- Temperature of the double jacket: 30 °C
- Stirring speed: at least 50 RPM
- Steam quantity per 0.1 % water content corresponds to an introduction time of 20 seconds
- Calculation of the steam quantity using the difference between target value upper limit (e.g. 37,5 wt%) plus 0,5% minus actual target value (e.g. 36 wt%).

This makes up a total time for steam injection of t = (38,0% - actual target value)/0, 1% x 20s.

After steam injection, the crystal powder is continuously stirred for at least 10 minutes (50 RPM). After performing the steam injection, perform at least one post-drying cycle needs to be performed.

A sample of the crystal powder may be taken for analysis purposes, e.g. drying loss is determined.

### 3.8.2 Post-drying (optional)

Post-drying is carried out in 30 - 60 minute cycles according to the following conditions and parameters:
- Ice condenser temperature TEK = -20 °C
- pressure: 5 mbar
- Temperature of the double jacket (DP): 30 °C
- Stirring speed: at least 50 RPM

After each post-drying cycle, the drying loss is determined. To do this, the stirrer is switched off and the vacuum is broken.

A sample of the crystal powder may be taken for analysis purposes, e.g. drying loss is determined.

### 3.9 Product Withdrawal

After reaching the nominal target value range, the production process continues by removing the final product ("powder phase") from the reaction vessel.

A suction device is used to discharge the powder phase of the product via a connection flange of the glass reactor.

The suction device (see Example 5) is designed like a vacuum cleaner with suction hose that is inserted into the reaction vessel. Via the suction hose, the final product is transferred into a product bag outside the reaction vessel. The product bag is implemented in a further glass vessel, kept under inert gas.

The net weight of manganese(II) chloride tetra-hydrate is determined. The final product met the high purity standards of the API.

### Example 4: industrial scale production of further salts

Successful production of further salts was out into practice. Examples are shown in Table 5 below.

It turned out that the principle of vacuum crystallization and further drying with a condenser trap to freeze and trap solvent was capable of producing all of these salts in API grade purity.

Table 5 shows production parameters for producing various API grade crystalline salts. The conditions for manganese(II) chloride tetra-hydrate (in detail shown in Example 4) may be summarized for comparison purposes as follows: Distillation was performed as for shown in Table 7 for CuCl₂·2H₂O. The heating/stem injection conditions were: no steam, T(DJ) = 145 °C, T(I) 70 - 80 °C. Nucleation conditions were as for CrCl₃·6H₂O. Cooling required: normal pressure, 25 RPM, T(I) ≥ 10 °C, t ≥ 12 h, cooling rate: -0,3 to -2,5 °C/min. Conditions for starting drying were: 5 mbar, T(start) = 1°C, T(static drying) = 30 - 40°C

**Table 5: production parameters for producing various API grade crystalline salts**

| | **CrCl₃·6H₂O** | **CuCl₂·2H₂O** | **FeCl₂·4H₂O** | **Na₂MoO₄·4H₂O** |
|---|---|---|---|---|
| Distillation | one step | one step | Two-stage with steam injection and nucleation after phase 1 Phase 2 = cooling under vacuum | Two-stage without steam injection and nucleation after phase 1 Phase 2 = cooling under vacuum |
| Phase 1 | 50 mbar T(double jacket, DJ) = 145 °C | 50 mbar T(DJ) = 145 °C | 100 mbar T(DJ) = 90 °C | 50 mbar T(DJ) = 145 °C |
| Phase 2 | | | 15 - 25 mbar T(DJ) = 70 °C | 20 mbar T(DJ) = 100 °C |
| Phase 1 T(I) = T inside vessel [°C] | 50 - 60 | 40 - 50 | 50 - 60 | 35 - 40 |
| Phase 2 T(I) = T inside vessel [°C] | | | 25-30 | 20 - 30 |
| Heating or Steam injection after distillation | No steam, just heat up, Procedure for light and heavy encrustation | Steam injection T(DJ) = 50 °C T(I) ≥ 90 °C | Steam injection T(DJ) = 70 °C T(I) = 60 °C | after Distillation 1 No steam, just heat up T(DJ) = 145 °C T(I) ≥ 95 °C |
| **Nucleation** | T(DJ) = 1 °C leading to T(I) = 40 °C 50 mbar 25 RPM | T(DJ) = 70 °C leading to 90 °C > T(I) ≥ 70 °C 400 mbar 25 RPM | after Distillation 1 T(DJ) = 70 °C 200 ≥ 100 mbar 50 RPM | after Distillation 1 T(DJ) = 100 °C 200 mbar 50 RPM |

| **Cooling** | normal pressure 25 RPM t ≥ 12h: T(I) ≥ 5 °C t ≥ 2 h: T(I) = 5°C cooling rate: -0,3 to -3 °C/min | stepwise cooling normal pressure 25 RPM 4 steps per 15 min: T(DJ) = 75 °C → 20 °C → 5 °C →1 °C leading to a final T(I) = 10 °C | after distillation 2 normal pressure 25 RPM T(DJ) = 15 °C final T(I) = 15 °C 9 h ≤ t ≤ 48 h | after distillation 2 normal pressure 25 RPM T(DJ) = 1 °C final T(I) = 10 °C no time schedule |
|---|---|---|---|---|
| **Drying** after removal of mother liquor until the start of the drying process (static drying), | T(start) = 1 °C | T(start) = 5°C | T(start) = 15 °C | T(start) = 0 °C |
| T(DJ) at the beginning of the drying step = T(start), T(DJ) during drying under vacuum= T(static drying) | 5 mbar T(static drying) = 30 °C | 5 mbar T(static drying) = 10 °C | 0 mbar T(static drying) = 30 °C | 5 mbar T(static drying) = 20 °C |
| Dynamic drying as for MnCl₂ 4 H₂O | | | | |

## Claims

1. A method for manufacturing a crystalline substance, wherein the method employs vacuum crystallization of a solution of the substance to be crystallized, comprising the following steps:
(i) applying vacuum to a vessel containing a solution of the substance to be crystallized to start crystallization, and
(ii) drying an obtained crystal cake in the vessel, wherein during drying a condenser trap connected to the vessel is used for removing solvent from the crystal cake, wherein solvent from the crystal cake is frozen in the condenser trap and thereby removed from the crystal cake.

2. The method of claim 1, wherein vacuum is applied to the vessel during the drying step (ii).

3. The method of any of claims 1-2, wherein the obtained crystalline substance
a) is of a purity as required for active pharmaceutical ingredients (APIs) and
b) is a metal salt hydrate selected from MnCl₂ 4H₂O, FeCl₂·4H₂O, CuCl₂·2H₂O, Na₂MoO₄·4H₂O, CrCl₃·6H₂O, NiCl₂·6H₂O, CoCl₂·6H₂O, FeCl₃·6H₂O, ZnCl₂·4H₂O, ZnCl₂·2H₂O, and C₁₂H₂₂O₁₄Zn.

4. The method of any of claims 1-3, further comprising the following step of
a) initiating the crystallization by nucleation to obtain crystal nuclei.

5. The method of claim 4, further comprising
b) after the formation of crystal nuclei, a step of crystal growth by applying a decrease of temperature to favour crystal growth.

6. The method of claim 5, further comprising
c) removing liquid from the grown crystals to obtain the crystal cake.

7. The method of claim 6, further comprising
d) drying the crystal cake obtained after conducting step c), wherein during drying the condenser trap, connected to the vessel is used for removing solvent from the crystal cake.

8. The method of claim 7, wherein the drying comprises
d1) a period of drying without the introduction of mechanical energy.

9. A device for manufacturing a crystalline substance comprising
(i) a reactor (2) which can be heated and/or cooled from outside, which is connected via connection line (3c) to
(ii) a condenser trap (3), and is connected via connection line (1a) to
(iii) a vacuum unit (1) suitable for regulating the pressure conditions in the reactor and the condenser trap (3).

10. The device of claim 9, further comprising a thermo unit (5) in thermal contact with the reactor (2).

11. The device of claim 9 or 10, further comprising a "filter base area" (4) in the reactor (2).

12. The device of any of claims 9-11, further comprising a stirrer (6).

13. The device of any of claims 9-12, further comprising a suction element (10).

14. A compound produced by a method of any of claims 1-8.

15. The compound of claim 14, which meets the GMP standards for API's (Active Pharmaceutical Ingredients) and is selected from MnCl₂ 4H₂O, FeCl₂·4H₂O, CuCl₂·2H₂O, Na₂MoO₄·4H₂O, CrCl₃·6H₂O, NiCl₂·6H₂O, COCl₂·6H₂O, FeCl₃·6H₂O, ZnCl₂·4H₂O, ZnCl₂·2H₂O, and C₁₂H₂₂O₁₄Zn.
